(19) **Europäisches Patentamt / European Patent Office / Office européen des brevets**

(11) **EP 4 089 951 A1**

(12) **EUROPEAN PATENT APPLICATION**
published in accordance with Art. 153(4) EPC

(43) Date of publication:
**16.11.2022 Bulletin 2022/46**

(21) Application number: **21749994.6**

(22) Date of filing: **04.02.2021**

(51) International Patent Classification (IPC):
**H04L 5/00** (2006.01)   **H04L 5/14** (2006.01)
**H04W 72/04** (2009.01)   **H04W 72/12** (2009.01)

(52) Cooperative Patent Classification (CPC):
**H04L 5/00; H04L 5/14; H04W 72/04; H04W 72/12;**
Y02D 30/70

(86) International application number:
**PCT/KR2021/001442**

(87) International publication number:
**WO 2021/158023 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2020 KR 20200013671**

(71) Applicant: **LG Electronics, Inc.**
**Yeongdeungpo-gu**
**Seoul 07336 (KR)**

(72) Inventors:
• **GO, Seongwon**
  **Seoul 06772 (KR)**
• **KANG, Jiwon**
  **Seoul 06772 (KR)**
• **KIM, Hyungtae**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR TRANSMITTING UPLINK IN WIRELESS COMMUNICATION SYSTEM**

(57)   Disclosed are a method and a device for transmitting an uplink in a wireless communication system. An uplink transmission method according to an embodiment of the present disclosure may comprise the steps of: receiving, from a base station, downlink control information (DCI) for scheduling a physical uplink shared channel (PUSCH) and triggering the transmission of a sounding reference signal (SRS); and transmitting the PUSCH and/or the SRS to the base station on the basis of the DCI. The PUSCH may be transmitted in a first slot if i) the transmission slot of the SRS, as determined by a slot offset related to the SRS, is the same first slot as the transmission slot of the PUSCH, and ii) the PUSCH and the SRS collide at one or more symbols within the first slot.

FIG.12

Receive DCI scheduling PUSCH and triggering transmission of SRS — S1201

Transmit PUSCH and/or SRS based on DCI — S1202

**Description**

[Technical Field]

The present disclosure relates to a wireless communication system, and in more detail, relates to a method and a device of transmitting an uplink in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device of transmitting an uplink channel and/or a sounding reference signal (SRS) by a terminal.

In addition, an additional technical problem of the present disclosure is to provide a method and a device of transmitting an uplink channel and/or a SRS when transmission between an uplink channel and a SRS collides.

The technical objects to be achieved by the present disclosure are not limited to the above-described technical objects, and other technical objects which are not described herein will be clearly understood by those skilled in the pertinent art from the following description.

[Technical Solution]

A method of transmitting an uplink in a wireless communication system according to an aspect of the present disclosure may include receiving downlink control information (DCI) scheduling a physical uplink shared channel (PUSCH) and triggering transmission of a sounding reference signal (SRS) from a base station and transmitting the PUSCH and/or the SRS to the base station based on the DCI. When i) a transmission slot of the SRS determined by a slot offset related to the SRS is the same first slot as a transmission slot of the PUSCH and ii) the PUSCH and the SRS collide in at least one symbol in the first slot, the PUSCH may be transmitted in the first slot.

A terminal transmitting an uplink in a wireless communication system according to an additional aspect of the present disclosure may include one or more transceivers for transmitting and receiving a wireless signal and one or more processors controlling the one or more transceivers. The one or more processors may be configured to receive downlink control information (DCI) scheduling a physical uplink shared channel (PUSCH) and triggering transmission of a sounding reference signal (SRS) from a base station and transmit the PUSCH and/or the SRS to the base station based on the DCI. When i) a transmission slot of the SRS determined by a slot offset related to the SRS is the same first slot as a transmission slot of the PUSCH and ii) the PUSCH and the SRS collide in at least one symbol in the first slot, the PUSCH may be transmitted in the first slot.

One or more non-transitory computer readable media storing one or more commands according to an additional aspect of the present disclosure may be controlled to receive downlink control information (DCI) scheduling a physical uplink shared channel (PUSCH) and triggering transmission of a sounding reference signal (SRS) from a base station and transmit the PUSCH and/or the SRS to the base station based on the DCI. When i) a transmission slot of the SRS determined by a slot offset related to the SRS is the same first slot as a transmission slot of the PUSCH and ii) the PUSCH and the SRS collide in at least one symbol in the first slot, the PUSCH may be transmitted in the first slot.

A processing device configured to control a terminal to transmit an uplink according to an additional aspect of the present disclosure may include one or more processors and one or more computer memories which are operably connected to the one or more processors and store instructions performing operations based on being executed by the one or more processors. The operations may include receiving downlink control information (DCI) scheduling a physical uplink shared channel (PUSCH) and triggering transmission of a sounding reference signal (SRS) from a base station and transmitting the PUSCH and/or the SRS to the base station based on the DCI. When i) a transmission slot of the SRS determined by a slot offset related to the SRS is the same first slot as a transmission slot of the PUSCH and ii) the PUSCH and the SRS collide in at least one symbol in the first slot, the PUSCH may be transmitted in the first slot.

Preferably, transmission of the SRS is delayed, and the SRS may be transmitted in a second slot available for transmission of the SRS after the first slot.

Preferably, if the SRS collides with an uplink channel in at least one symbol within the second slot, transmission of the SRS is delayed, and the SRS may be transmitted in a third slot available for the transmission of the SRS after the second slot.

Preferably, transmission of the SRS may be delayed only within a preconfigured time duration or only until the preconfigured maximum number of delays.

Preferably, excluding the at least one symbol colliding with transmission of the PUSCH in the first slot, the SRS may be transmitted.

Preferably, transmission of the SRS may be dropped.

Preferably, whether to transmit the PUSCH or the SRS in the first slot may be determined according to whether the first slot is a slot configured to prioritize SRS transmission.

Preferably, if the first slot is a slot configured to prioritize the SRS transmission, whether to transmit the PUSCH or the SRS in the first slot may be determined based on a preconfigured priority rule.

Preferably, for the priority rule, a SRS may be prioritized over a PUSCH and an uplink channel other than a PUSCH may be prioritized over a SRS.

Preferably, for the priority rule, priority between a SRS and an uplink channel may be determined based on contents transmitted in an uplink channel.

Preferably, for the priority rule, only a SRS for predetermined usage may have priority over an uplink channel.

Preferably, the PUSCH and the SRS may be scheduled in a different cell.

Preferably, priority between the PUSCH and the SRS may be determined according to whether the sum of transmission power of the PUSCH and the SRS exceeds the maximum transmission power of the terminal.

[Advantageous Effects]

According to an embodiment of the present disclosure, although collision between a SRS and an uplink channel occurs, collision between a SRS and an uplink channel may be prevented by defining an operation for solving it.

In addition, according to an embodiment of the present disclosure, although collision between a SRS and an uplink channel occurs, ambiguity for an uplink transmission method may be resolved by defining an operation for solving it.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 represents an example of a component carrier and carrier aggregation in a wireless communication system to which the present disclosure may be applied.

FIG. 8 represents an example of cell division in a wireless communication system to which the present disclosure may be applied.

FIG. 9 illustrates a reference signal pattern mapped to a downlink resource block pair in a wireless communication system to which the present disclosure may be applied.

FIG. 10 illustrates an uplink subframe including a sounding reference signal symbol in a wireless communication system to which the present disclosure may be applied.

FIG. 11 is a diagram illustrating a signaling procedure between a base station and a terminal for an uplink transmission method according to an embodiment of the present disclosure.

FIG. 12 is a diagram illustrating an operation of a terminal for an uplink transmission method according to an embodiment of the present disclosure.

FIG. 13 illustrates a block diagram of a wireless communication device according to an embodiment of the present disclosure.

FIG. 14 illustrates a vehicle device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment

- ZP: zero power

<u>Overall System</u>

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

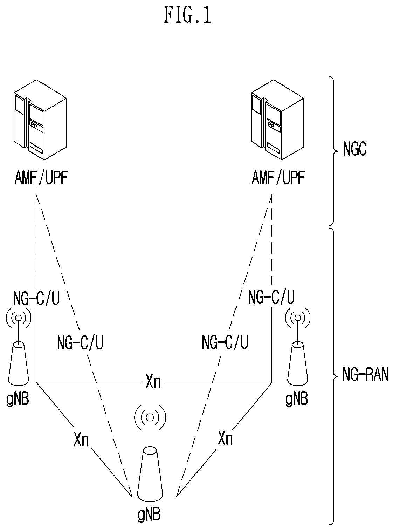

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

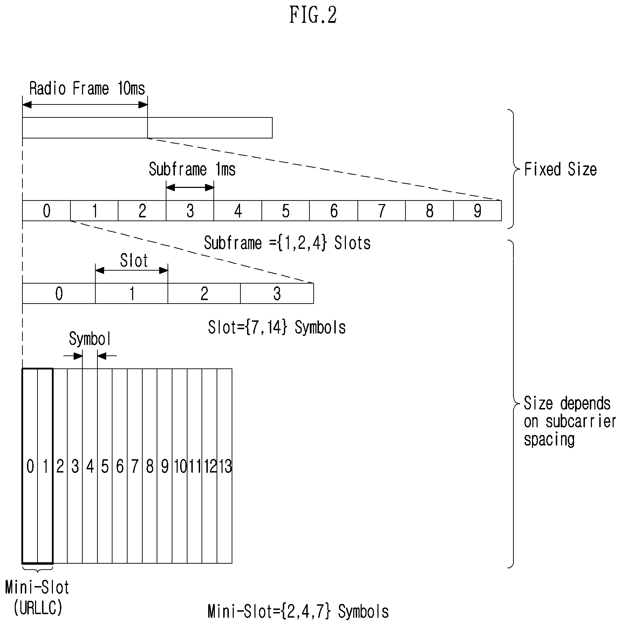

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15 \ [kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1410MHz - 7125MHz | | 15, 30, 60kHz |
| FR224250MHz - 52600MHz | | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,... , N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe, \mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

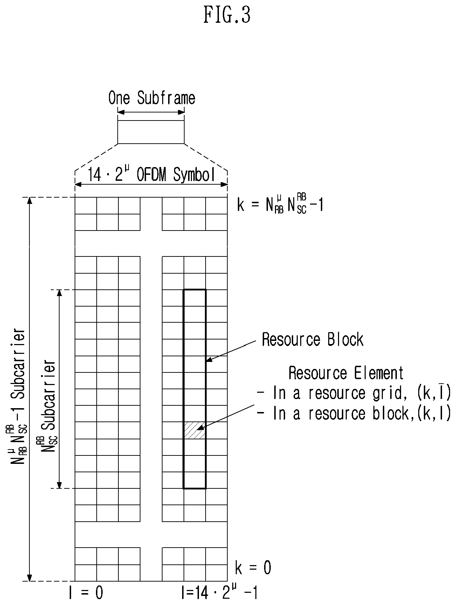

FIG. 3 illustrates a resource grid in a wireless communication system to which the present disclosure may be applied.

In reference to FIG. 3, it is illustratively described that a resource grid is configured with $N_{RB}^\mu N_{sc}^{RB}$ subcarriers in a frequency domain and one subframe is configured with $14 \cdot 2^\mu$ OFDM symbols, but it is not limited thereto. In an NR system, a transmitted signal is described by OFDM symbols of $2^\mu N_{symb}^{(\mu)}$ and one or more resource grids configured

with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

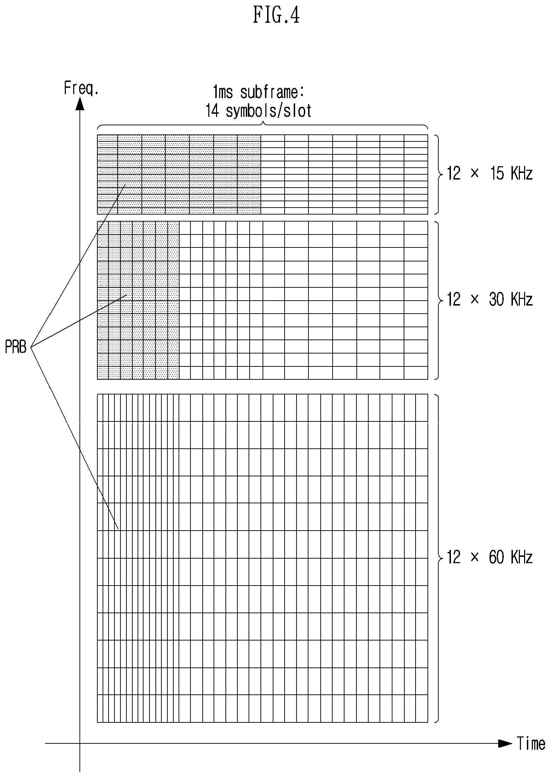

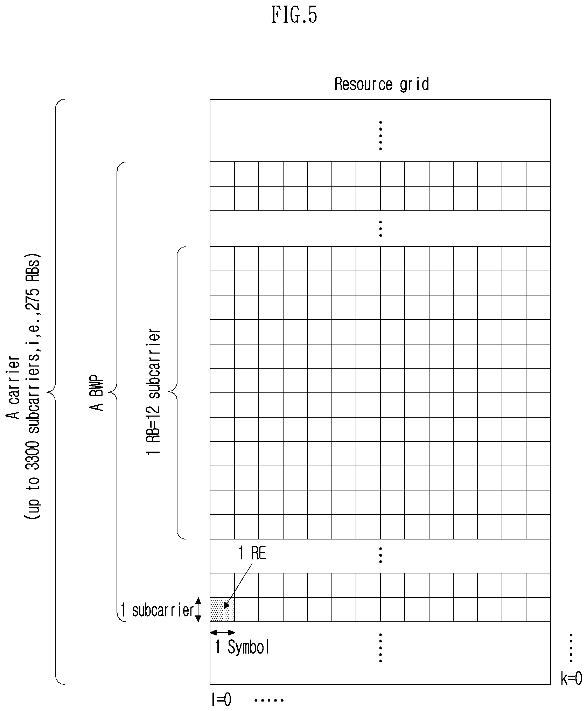

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

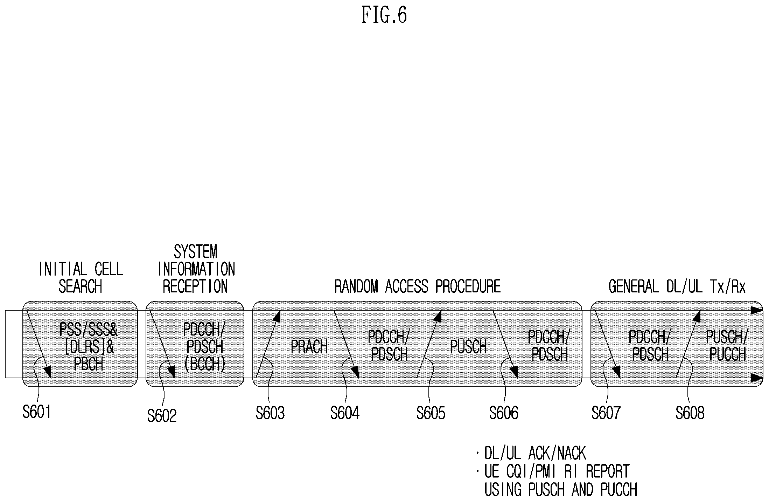

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |

(continued)

| DCI Format | Use |
|---|---|
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Carrier Aggregation (CA)

A communication environment considered in embodiments of the present disclosure includes all multi-carrier support environments. In other words, a multi-carrier system or a carrier aggregation (CA) system used in the present disclosure refers to a system which aggregates and uses 1 or more component carriers (CC) having bandwidth smaller than target band when configuring target broadband in order to support broadband.

In the present disclosure, multi-carriers mean aggregation of a carrier (or, carrier aggregation) and in this case, carrier aggregation means both aggregation between contiguous carriers and aggregation between non-contiguous carriers. In addition, the number of component carriers aggregated between a downlink and an uplink may be configured differently. When the number of downlink component carriers (hereinafter referred to as 'DL CC') is the same as the number of uplink component carriers (hereinafter referred to as 'UL CC'), it is referred to as symmetric aggregation and when that number is different, it is referred to as asymmetric aggregation. Such carrier aggregation may be used interchangeably with a term such as carrier aggregation, bandwidth aggregation, spectrum aggregation, etc.

Carrier aggregation configured by combining two or more component carriers is aimed at supporting up to 100MHz bandwidth in a LTE-A system. When combining 1 or more carriers having bandwidth smaller than target band, bandwidth of a combined carrier may be limited to bandwidth used in the existing system to maintain backward compatibility with the existing IMT system. For example, it may be configured that the existing 3GPP LTE system supports {1.4, 3, 5, 10, 15, 20}MHz bandwidth and a 3GPP LTE-advanced system (i.e., LTE-A) supports bandwidth greater than 20MHz by using only the bandwidth for backward compatibility with the existing system. In addition, a carrier aggregation system used in the present disclosure may be configured to support carrier aggregation by defining new bandwidth regardless of bandwidth used in the existing system.

A LTE-A system uses a concept of a cell to manage a radio resource.

The above-described carrier aggregation environment may be referred to as a multiple cells environment. A cell is defined as a combination of one pair of a downlink resource (DL CC) and an uplink resource (UL CC), but an uplink resource is not an essential element. Accordingly, a cell may be configured only with downlink resources, or with downlink resources and uplink resources. When a specific terminal has only one configured serving cell, it may have 1 DL CC and 1 UL CC, but when a specific terminal has 2 or more configured serving cells, it may have as many DL CCs as the number of cells and the number of UL CCs may be the same as or smaller than that.

Alternatively, a DL CC and an UL CC may be configured conversely. In other words, when a specific terminal has multiple configured serving cells, a carrier aggregation environment that there are more UL CCs than the number of DL CCs may be also supported. In other words, carrier aggregation may be understood as aggregation of two or more cells with each different carrier frequency (center frequency of a cell). 'A cell' referred to here should be distinguished from a generally used 'cell' as a region covered by a base station.

A cell used in a LTE-A system includes a primary cell (PCell) and a secondary cell (SCell). A PCell and a SCell may be used as a serving cell. For a terminal which is in a RRC_CONNECTED state, but does not configure carrier aggregation or does not support carrier aggregation, there is only one serving cell configured only with PCells. On the other hand, for a terminal which is in a RRC_CONNECTED state and configures carrier aggregation, there may be one or more serving cells and a PCell and one or more SCells are included in the whole serving cells.

After an initial security activation process starts, E-UTRAN may configure a network which includes one or more SCells in addition to a PCell which is initially configured in a connection configuration process. In a carrier aggregation environment, a PCell and a SCell may operate as each component carrier. In the following embodiment, a primary component carrier (PCC) may be used in the same meaning as a PCell and a secondary component carrier (SCC) may be used in the same meaning as a SCell.

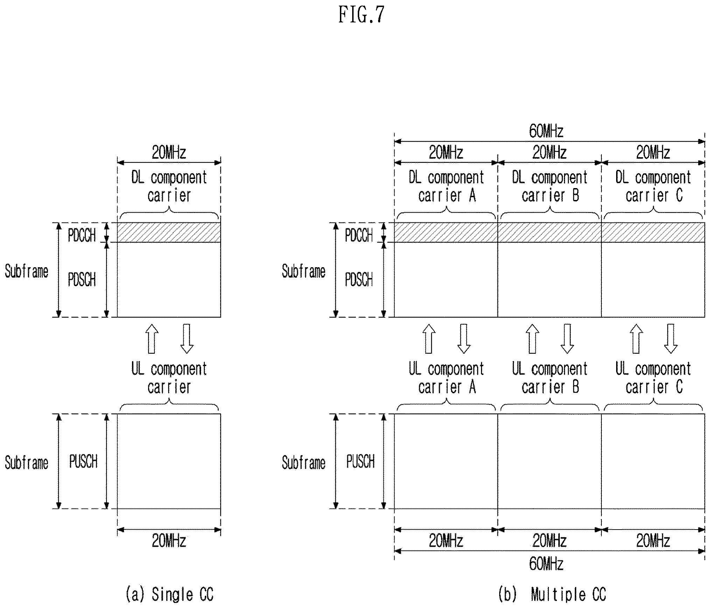

FIG. 7 represents an example of a component carrier and carrier aggregation in a wireless communication system to which the present disclosure may be applied.

FIG. 7(a) represents a single carrier structure used in a LTE system. A DL CC and an UL CC exist in a component carrier. One component carrier may have a frequency range of 20MHz.

FIG. 7(b) represents a carrier aggregation structure used in a LTE_A system. FIG. 7(b) represents a case in which 3 component carriers having a frequency size of 20MHz are combined. There are 3 DL CCs and UL CCs, respectively, but there is no limit to the number of DL CCs and UL CCs. For carrier aggregation, a terminal may monitor 3 CCs simultaneously, receive a downlink signal/data and transmit an uplink signal/data.

If N DL CCs are managed in a specific cell, a network may allocate M (M≤N) DL CCs to a terminal. In this case, a terminal may monitor only M limited DL CCs and receive a DL signal. In addition, a network may allocate a main DL CC to a terminal by giving priority to L (L≤M≤N) DL CCs and in this case, UE should monitor L DL CCs. Such a method may be equally applied to uplink transmission.

Linkage between a carrier frequency of a downlink resource (or a DL CC) and a carrier frequency of an uplink resource (or an UL CC) may be indicated by system information or a higher layer message like a RRC message. For example, a combination of a DL resource and an UL resource may be configured by linkage defined by SIB2 (System Information Block Type2). Specifically, linkage may mean a mapping relationship between a DL CC that a PDCCH carrying an UL grant is transmitted and an UL CC which uses the UL grant and may also mean a mapping relationship between a DL CC (or an UL CC) that data for HARQ is transmitted and an UL CC (or a DL CC) that a HARQ ACK/NACK signal is transmitted.

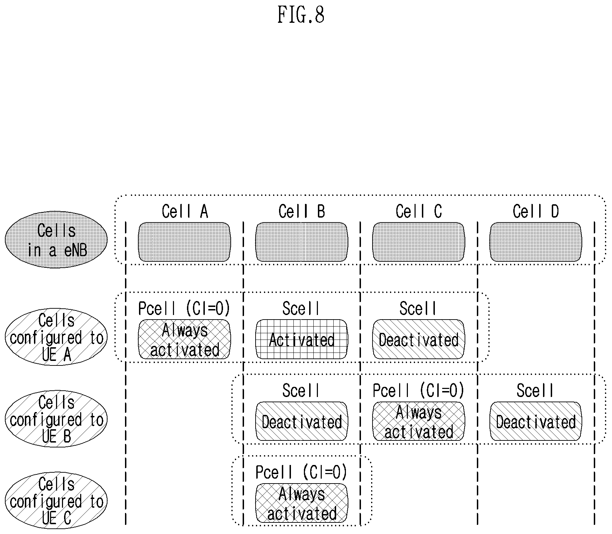

In a system supporting carrier aggregation, a cell may be divided as in the following FIG. 8.

FIG. 8 represents an example of cell division in a wireless communication system to which the present disclosure may be applied.

A configured cell is configured per UE as a cell configured to perform carrier aggregation based on measurement report among cells of a base station as in FIG. 8. A configured cell pre-reserves a resource for ACK/NACK transmission for PDSCH transmission. An activated cell performs CSI reporting and SRS transmission for PDSCH/PUSCH transmission as a cell configured to actually transmit a PDSCH/a PUSCH among configured cells. A de-activated cell stops CSI reporting and SRS transmission as a cell configured not to perform PDSCH/PUSCH transmission by a timer operation or a command of a base station.

Reference Signal (RS)

Because data is transmitted through a wireless channel in a wireless communication system, a signal may be distorted during transmission. To accurately receive a distorted signal at a receiving end, distortion of a received signal should be corrected by using channel information. To detect channel information, a signal transmission method that both a transmission side and a reception side know and a method of detecting channel information by using a degree of distortion when a signal is transmitted through a channel are mainly used. The above-described signal is referred to as a pilot signal or a reference signal (RS).

In addition, when transmitting a packet recently in most mobile communication systems, instead of using one transmission antenna and one reception antenna hitherto, a method which may improve transmission and reception data efficiency by adopting multiple transmission antennas and multiple reception antennas is used. When transmitting and receiving data by using multiple input and output antennas, a channel state between a transmission antenna and a reception antenna should be detected to accurately receive a signal. Accordingly, each transmission antenna should have an individual reference signal.

In a mobile communication system, a RS may be largely divided into two according to its purpose. There are a RS for acquiring channel state information and a RS used for data demodulation. The former should be transmitted by broadband because UE is aimed at acquiring channel state information as a downlink and even UE which does not receive downlink data in a specific subframe should be able to receive and measure that RS. In addition, it is also used for radio resource management (RRM) measurement, etc. such as handover, etc. As the latter is a RS which is transmitted together by a base station to a corresponding resource when transmitting a downlink, UE may perform channel estimation by receiving a corresponding RS and accordingly, may demodulate data. This RS should be transmitted to a region where data is transmitted.

For a downlink reference signal, there are one common RS (CRS) for information acquisition on a channel state shared by all terminals in a cell and measurement, etc. of handover, etc. and a dedicated RS used for data demodulation only for a specific terminal. Information for demodulation and channel measurement may be provided by using such reference signals. In other words, a DRS is used only for data demodulation and a CRS is used for both channel information acquisition and data demodulation.

A reception side (i.e., a terminal) measures a channel state from a CRS and performs feedback for an indicator related to channel quality such as a CQI (Channel Quality Indicator), a PMI (Precoding Matrix Index) and/or a RI (Rank Indicator) to a transmission side (i.e., a base station). A CRS is also referred to as a cell-specific RS. On the other hand, a reference signal related to feedback of channel state information (CSI) may be defined as a CSI-RS.

A DRS may be transmitted through resource elements when data demodulation in a PDSCH is needed. A terminal may receive whether a DRS exists through a higher layer and is valid only when a corresponding PDSCH is mapped. A DRS may be referred to as an UE-specific RS or a demodulation RS (DMRS).

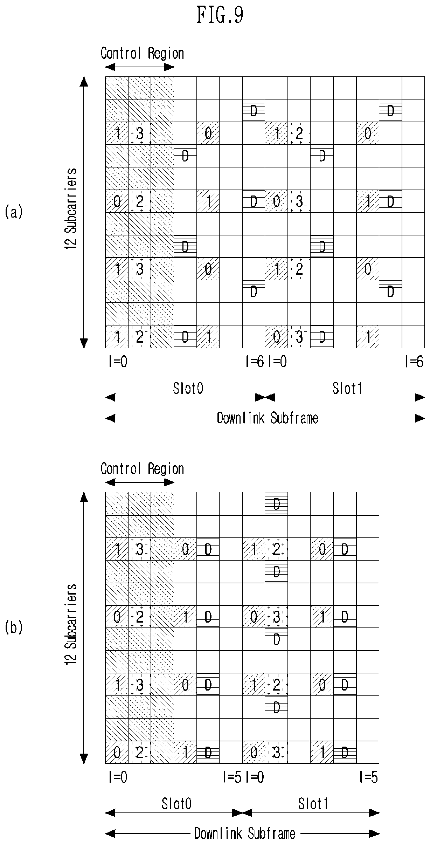

FIG. 9 illustrates a reference signal pattern mapped to a downlink resource block pair in a wireless communication system to which the present disclosure may be applied.

In reference to FIG. 9, a downlink resource block pair may be represented as one subframe in a time domain x 12 subcarriers in a frequency domain in a unit to which a reference signal is mapped. In other words, on a time axis (a x-axis), one resource block pair has a length of 14 OFDM symbols for normal CP (normal Cyclic Prefix) (for FIG. 9(a)) and has a length of 12 OFDM symbols for extended CP (extended Cyclic Prefix) (for FIG. 9(b)). Resource elements (REs) described as '0', '1', '2' and '3' in a resource block grid mean a position of a CRS of antenna port index '0', '1', '2' and '3' respectively and resource elements described as 'D' mean a position of a DRS.

Hereinafter, if a CRS is described in more detail, a CRS is used to estimate a channel of a physical antenna and is distributed in the whole frequency band as a reference signal which may be commonly received in all terminals positioned within a cell. In other words, this CRS is transmitted per every subframe for broadband as a cell-specific signal. In addition, a CRS may be used for channel quality information (CSI) and data demodulation.

A CRS is defined in a variety of formats according to an antenna array in a transmission side (a base station). In a 3GPP LTE system (e.g., release-8), a RS for up to 4 antenna ports is transmitted according to the number of transmission antennas of a base station. A downlink signal transmission side has 3 types of antenna arrays like a single transmission antenna, 2 transmission antennas and 4 transmission antennas. For example, when the number of transmission antennas of a base station is two, a CRS for antenna port No.0 and No.1 is transmitted and when it is four, a CRS for antenna port No.0~3 is transmitted respectively. When a base station has 4 transmission antennas, a CRS pattern in one RB is the same as in FIG. 9.

When a base station uses a single transmission antenna, a reference signal for a single antenna port is arranged.

When a base station uses two transmission antennas, a reference signal for two transmission antenna ports is arranged by using a Time Division Multiplexing (TDM) and/or Frequency Division Multiplexing (FDM) method. In other words, a different time resource and/or a different frequency resource is allocated so that a reference signal for 2 antenna ports will be distinguished respectively.

In addition, when a base station uses 4 transmission antennas, a reference signal for 4 transmission antenna ports is arranged by using a TDM and/or FDM method. Channel information measured by a reception side (a terminal) of a downlink signal may be used to demodulate data transmitted by using a transmission method such as single transmission antenna transmission, transmission diversity, closed-loop spatial multiplexing, open-loop spatial multiplexing or Multi-User MIMO (Multi Input Multi Output).

If MIMO are supported, when a reference signal is transmitted from a specific antenna port, the reference signal is transmitted to a position of resource elements specified according to a pattern of a reference signal and is not transmitted to a position of resource elements specified for other antenna port. In other words, a reference signal between different antennas is not overlapped each other.

Hereinafter, when a DRS is described in more detail, a DRS is used to demodulate data. A precoding weight used for a specific terminal in MIMO transmission is combined with a transmission channel transmitted in each transmission antenna when a terminal receives a reference signal and is used to estimate a corresponding channel without a change.

A 3GPP LTE system (e.g., release-8) supports up to 4 transmission antennas and a DRS for rank 1 beamforming is defined. A DRS for rank 1 beamforming also represents a reference signal for antenna port index 5.

It should be designed to support up to 8 transmission antennas with a downlink of a base station in a LTE-A system advanced and developed from a LTE system. Accordingly, a RS for up to 8 transmission antennas should be also supported. For a downlink RS in a LTE system, only a RS for up to 4 antenna ports is defined, so when a base station has 4 to 8 downlink transmission antennas in a LTE-A system, a RS for these antenna ports should be additionally defined and designed. For a RS for up to 8 transmission antenna ports, both a RS for channel estimation and a RS for data demodulation described above should be designed.

One of important considerations in designing a LTE-A system is backward compatibility, i.e., that a LTE terminal should operate well without any problem even in a LTE-A system and a system should also support it. From a RS transmission point of view, a RS for up to 8 transmission antenna ports should be additionally defined in a time-frequency domain that a CRS defined in LTE is transmitted per every subframe to full band. If a RS pattern for up to 8 transmission antennas is added to full band per every subframe in the same way as a CRS in the existing LTE in a LTE-A system, a RS overhead gets excessively large.

Accordingly, a RS which is newly designed in a LTE-A system is largely divided into two categories, which is a RS for channel estimation for selection of MCS, PMI, etc. (CSI-RS: Channel State Information-RS, Channel State Indication-RS, etc.) and a RS for data demodulation transmitted to 8 transmission antennas (DM-RS: Data Demodulation-RS).

A CSI-RS for channel estimation has a characteristic of being designed mainly for channel estimation unlike the existing CRS being used for data demodulation at the same time as for channel measurement, measurement, etc. of handover, etc. Of course, it may be also used for measurement, etc. of handover, etc. As a CSI-RS is transmitted only to obtain information on a channel state, it does not need to be transmitted per every subframe unlike a CRS. To reduce an overhead of a CSI-RS, a CSI-RS is intermittently transmitted on a time axis.

A DM-RS is transmitted in a dedicated way to UE scheduled in a corresponding time-frequency domain for data demodulation. In other words, a DM-RS of specific UE is transmitted only for a region that corresponding UE is scheduled, i.e., in a time-frequency domain which receives data.

A LTE-A system supports up to 8 transmission antennas through a downlink of a base station. If a RS for up to 8 transmission antennas is transmitted to full band per every subframe in the same way as a CRS in the existing LTE in a LTE-A system, a RS overhead gets excessively large. Accordingly, two RSs are added in a LTE-A system by being divided into a CSI-RS for CSI measurement for selection of MCS, PMI, etc. and a DM-RS for data demodulation. A CSI-RS may be used for RRM measurement, etc., but was designed mainly for CSI acquisition. A CSI-RS is not used for data demodulation, so it is not needed to be transmitted per every subframe. Therefore, it is transmitted intermittently on a time axis to reduce an overhead of a CSI-RS. In other words, a CSI-RS may be periodically transmitted with a period of an integer multiple of one subframe or may be transmitted in a specific transmission pattern. In this case, a period or a pattern that a CSI-RS is transmitted may be configured by eNB.

A DM-RS is transmitted in a dedicated way to UE scheduled in a corresponding time-frequency domain for data demodulation. In other words, a DM-RS of specific UE is transmitted only for a region that corresponding UE is scheduled, i.e., in a time-frequency domain which receives data.

To measure a CSI-RS, UE should know information on a transmission subframe index of a CSI-RS for each CSI-RS antenna port of a cell to which it belongs, a time-frequency position of a CSI-RS resource element (RE) in a transmission subframe, and a CSI-RS sequence, etc.

eNB in a LTE-A system should transmit a CSI-RS to up to 8 antenna ports, respectively. A resource used for CSI-RS transmission of a different antenna port should be orthogonal each other. When one eNB transmits a CSI-RS for a different antenna port, a CSI-RS for each antenna port may be mapped to a different RE to allocate these resources orthogonally by a FDM/TDM method. Alternatively, it may be transmitted by a CDM method of mapping a CSI-RS for a different antenna port to a code orthogonal to each other.

When eNB informs its cell UE of information on a CSI-RS, first, it should inform information on a time-frequency to which a CSI-RS for each antenna port is mapped. Specifically, there are subframe numbers that a CSI-RS is transmitted, or a period that a CSI-RS is transmitted, a subframe offset that a CSI-RS is transmitted, an OFDM symbol number that a CSI-RS RE of a specific antenna is transmitted, frequency spacing, an offset or a shift value of a RE on a frequency axis and so on.

Sounding Reference Signal (SRS)

A SRS is mainly used for channel quality measurement to perform frequency-selective scheduling of an uplink and is not related to transmission of uplink data and/or control information. But, it is not limited thereto and a SRS may be used for a variety of other purposes to improve power control or support various start-up functions of terminals which are not scheduled recently. As an example of a start-up function, an initial modulation and coding scheme (MCS), initial power control for data transmission, timing advance and frequency semi-selective scheduling may be included. In this case, frequency semi-selective scheduling refers to scheduling which selectively allocates a frequency resource to a first slot of a subframe and allocates a frequency resource by pseudo-randomly jumping to other frequency in a second slot.

In addition, a SRS may be used to measure downlink channel quality on the assumption that a radio channel between an uplink and a downlink is reciprocal. Such an assumption is valid especially in a Time Division Duplex (TDD) system that an uplink and a downlink share the same frequency spectrum, and are divided in a time domain.

Subframes of a SRS transmitted by a certain terminal in a cell may be represented by a cell-specific broadcast signal. A 4-bit cell-specific 'srsSubframeConfiguration' parameter represents an array of 15 possible subframes that a SRS may be transmitted through each radio frame. By such arrays, flexibility for adjustment of a SRS overhead is provided according to a deployment scenario.

A 16th array of them completely turns off a switch of a SRS in a cell, which is mainly suitable for a serving cell serving high-speed terminals.

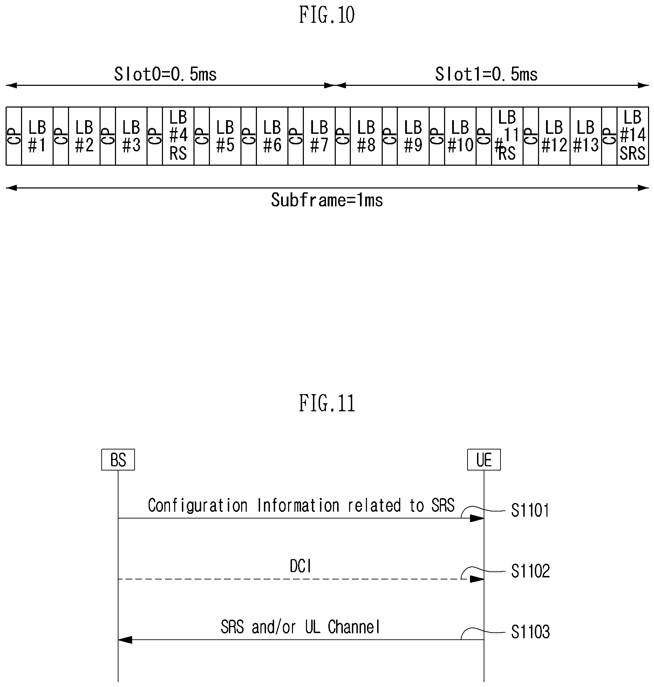

FIG. 10 illustrates an uplink subframe including a sounding reference signal symbol in a wireless communication system to which the present disclosure may be applied.

In reference to FIG. 10, a SRS is always transmitted through a last SC-FDMA symbol in an arranged subframe. Accordingly, a SRS and a DMRS are positioned in a different SC-FDMA symbol.

PUSCH data transmission is not allowed in a specific SC-FDMA symbol for SRS transmission and consequently, when a sounding overhead is the highest, i.e., even when a SRS symbol is included in all subframes, a sounding overhead does not exceed about 7%.

Each SRS symbol is generated by a basic sequence on a given time unit and frequency band (a sequence set based on Zadoff-Ch(ZC) or a random sequence) and all terminals in the same cell use the same basic sequence. In this case, SRS transmission from a plurality of terminals within the same cell and in the same frequency band and at the same time is distinguished from each other by being orthogonal by a different cyclic shift of a basic sequence.

A SRS sequence from a different cell may be distinguished because a different basic sequence is allocated to each cell, but orthogonality between different basic sequences is not guaranteed.

Sounding Reference Signal (SRS) Transmission and Reception Method

Hereinafter, in the present disclosure, a HARQ (hybrid automatic repeat request) reference configuration method is described for a configuration and an indication of an additional SRS between a base station and a terminal (UE). In addition, an operation of UE for a DL HARQ and an UL HARQ is described based on a corresponding configuration. In addition, based on a pre-configuration of transmittable subframe(s) of an additional SRS between a base station and UE and subframe(s) prioritizing an additional SRS, an operation of UE for preventing an additional SRS from colliding with other UL channels is described. Last, an operation of UE for collision between an additional SRS and a PUSCH or for collision between SRSs in a carrier aggregation (CA) situation is described.

In reference to a LTE standard to Rel-15, a SRS (Sounding Reference Signal) may be transmitted in a last symbol of each subframe in a FDD (Frequency Division Duplex) system. In addition, in a TDD (Time Division Duplex) system, a SRS may be transmitted in 1 symbol or 2 symbols according to a special subframe configuration by additionally using UpPTS in a special subframe other than SRS transmission in an UL normal subframe. In addition, a SRS may be transmitted in 2 symbols or 4 symbols according to whether a SC-FDMA symbol for an UL is additionally configured other than the existing UpPTS in a special subframe. In LTE, a SRS may be divided into type 0 and type 1 triggering according to a time domain characteristic. For type 0, it is a periodic SRS based on a higher layer configuration and for type 1, it is an aperiodic SRS triggered by DCI.

Hereinafter, a relationship between a SRS and a PUSCH is described.

In LTE, a cell specific SRS may be allocated cell-specifically in a normal subframe. A base station may configure to UE a combination of subframe numbers that a cell specific SRS is allocated through higher layer signaling. When mapping a PUSCH to a resource element (RE) in a subframe that a cell specific SRS is allocated, UE leaves a last symbol that a cell specific SRS is configured regardless of whether an UE specific SRS is configured and protects a SRS symbol. In other words, a PUSCH is not mapped in a last symbol that a cell specific SRS is configured.

In addition, when SRS transmission and PUSCH transmission collide in UpPTS of a TDD special subframe, UE does not transmit a SRS.

For carrier aggregation, when a SRS of a first serving cell and a PUSCH of a second serving cell are overlapped in the same symbol in a time domain, UE drops (i.e., does not transmit) a SRS.

Hereinafter, a relationship between a SRS and a PUCCH is described.

When SRS and PUCCH format 2 series (i.e., PUCCH format 2/2a/2b) collide in the same subframe of the same serving cell, a terminal does not transmit a type 0 triggered SRS. On the other hand, for a type 1 triggered SRS, when colliding with a PUCCH including HARQ-ACK, a terminal does not transmit a SRS and when colliding with PUCCH format 2 which does not include HARQ-ACK, a terminal transmits a SRS.

For PUCCH format 1 series (1/1a/b) and PUCCH format 3, 4, 5, simultaneous transmission of a SRS and a PUCCH is supported in the same subframe by supporting a shortened PUCCH in a form that uplink control information (UCI) data is not loaded in a last symbol that a SRS may be configured in a subframe. Whether this shortened PUCCH may be transmitted simultaneously with a SRS may be configured by a higher layer parameter, ackNackSRS-SimultaneousTransmission. When ackNackSRS-SimultaneousTransmission is 'FALSE', if a SRS collides with a PUCCH carrying HARQ-ACK and/or a positive SR (scheduling request) in the same subframe/slot/subslot, a terminal does not transmit a SRS. In addition, although ackNackSRS-SimultaneousTransmission is TRUE, if a SRS is overlapped with a PUCCH of a shortened format carrying HARQ-ACK and/or a positive SR at a symbol level, a terminal does not transmit a SRS.

Meanwhile, for PUCCH format 1 series and format 3, a shortened PUCCH format is used regardless of whether an UE specific SRS is configured in a subframe that a cell specific SRS is configured. For PUCCH format 4/5, a shortened PUCCH format is used if it is overlapped with bandwidth of a cell specific SRS regardless of whether an UE specific SRS is configured in a subframe that a cell specific SRS is configured.

Hereinafter, a discussion on MIMO improvement (additional SRS) in LTE is described.

In determining additional SRS symbol(s), a non-CA (carrier aggregation) situation should be considered in TDD, a non-CA (carrier aggregation) situation should be considered in TDD and a CA situation should be considered in FDD-TDD.

A time position of possible additional SRS symbol(s) in one normal UL subframe in one cell includes the following:

Option 1: All symbols in one slot may be used for a SRS from a cell point of view. For example, other slot in the subframe may be used for PUSCH transmission for a shortened TTI (sTTI: shortened Transmission Time Interval)-possible UE.

Option 2: All symbols in one subframe may be used for a SRS from a cell point of view.

Option 3: A subset of symbols in one slot may be used for a SRS from a cell point of view. For example, other slot in the subframe may be used for PUSCH transmission for a shortened TTI-possible UE.

At least in a low downlink SINR (signal-to-interference-plus-noise ratio) region, support of additional SRS symbols per UE in a normal subframe may obtain gain of downlink performance.

Aperiodic SRS transmission for additional SRS symbol(s) is supported.

A time position of possible additional SRS symbol(s) in one normal uplink subframe in one cell is selected from the following options.

Option 1: All symbols may be used for a SRS from a cell point of view only in one slot in one subframe.

Option 2: All symbols in one subframe may be used for a SRS from a cell point of view.

For UE that additional SRS symbols in one UL subframe are configured, SRS transmission is selected from the following options.

Option 1: Frequency hopping in one UL subframe is supported.

Option 2: Repetition in one UL subframe is supported.

Option 3: Both frequency hopping and repetition in one UL subframe are supported.

Both intra-subframe frequency hopping and repetition are supported for an aperiodic SRS in additional symbols.

Intra-subframe antenna switching is supported for an aperiodic SRS in additional symbols.

In conclusion, a term of 'additional SRS symbols' is introduced in release-16 and a last symbol is not a part of 'additional SRS symbols' (i.e., not included).

A legacy SRS and additional SRS symbol(s) may be configured for the same UE.

When a legacy SRS is aperiodic, UE may transmit one of a legacy SRS or additional SRS symbol(s) in the same subframe.

When a legacy SRS is periodic, UE may transmit a legacy SRS and additional SRS symbol(s) in the same of a different subframe.

The number of additional SRS symbols which may be configured for UE is 1~13.

For a time position of possible additional SRS symbols in one normal UL subframe in one cell, 1 to 13 symbols in one subframe may be used for a SRS from a cell point of view.

The same power control configuration is applied to all additional SRS symbols configured for single UE.

Transmission of an aperiodic legacy SRS and aperiodic additional SRS symbol (s) in the same subframe of UE is supported.

In an UL normal subframe of a LTE TDD system to Rel-15, both a SRS for a specific cell (i.e., a cell-specific SRS) and a SRS for specific UE (i.e., an UE-specific SRS) may be configured only in one symbol (e.g., a last symbol) in one subframe.

In Rel-16 LTE MIMO enhancement, it was agreed to support only an aperiodic SRS in an additional SRS of an UL normal subframe.

The existing legacy SRS has a purpose of UL channel state information (CSI) acquisition for UL scheduling, UL link adaptation, DL CSI acquisition for DL scheduling with DL/UL reciprocity, etc. An additional SRS, unlike a legacy SRS, is mainly intended to acquire DL information of each cell by using DL/UL reciprocity in a single serving cell or multi cells (i.e., a carrier aggregation (CA) environment). A legacy SRS was transmitted only in a last symbol of the existing UL normal subframe. An additional SRS, unlike a legacy SRS, may be transmitted through multi symbols at a position of other symbol excluding a last symbol. Accordingly, a PUSCH and/or a PUCCH of other UE other than corresponding UE may collide with a SRS transmitted by UE in a time domain according to a configuration. In addition, even for UE itself transmitting a SRS, there is a possibility that its SRS and its PUSCH and/or PUCCH will collide.

Especially, when HARQ ACK/NACK feedback of UE for DL data collides with the additional SRS, DL throughput degradation occurs. In preparation for this case, an UL subframe may be divided into two types, a DL HARQ feedback dedicated subframe and a subframe that an additional SRS may be transmitted, by reusing a concept of a HARQ reference configuration and accordingly, DL HARQ feedback and an additional SRS may not collide.

But, even in this case, when feedback of a base station for UL data of UE (e.g., a PHICH (Physical channel HybridARQ Indicator Channel)) comes down to NACK, retransmission timing of UL data belongs to a subframe that an additional SRS may be transmitted and accordingly, a problem occurs that UL retransmission and an additional SRS may collide. In the present disclosure, an UE operation in this case is proposed.

UE which applies at least one proposed operation among proposals in the present disclosure is referred to as "enhanced UE" for convenience and as an example, it includes UE which may perform an operation for configuring/applying/transmitting the additional SRS such as Rel-16 UE, etc.

In addition, unless otherwise stated in the present disclosure, an additional SRS means both a periodic additional SRS and an aperiodic additional SRS. But, in a description of a proposal, only when trigger/triggering is additionally mentioned, there may be a limit that an additional SRS means an aperiodic additional SRS.

In addition, when a SRS resource is transmitted in the present disclosure, it may mean that a SRS is mapped and transmitted in a corresponding frequency/time/space resource.


Embodiment 1

Method 1: When a HARQ reference configuration is utilized in an additional SRS, DL/UL HARQ Operation Method between Base Station and Terminal

A method for preparing a case in which an additional SRS configured/indicated to UE and a PUCCH and/or a PUSCH of corresponding UE collide is proposed. For it, a base station may configure a DL HARQ feedback (e.g., PUCCH) dedicated UL subframe to corresponding UE through a configuration of a DL HARQ reference configuration. And, additional SRS transmission of enhanced UE may be prohibited in a corresponding configured UL subframe. Accordingly, collision of an additional SRS and DL HARQ feedback (e.g., a PUCCH) in enhanced UE may be prevented.

In other words, an UL subframe may be divided into two types, a DL HARQ feedback dedicated subframe and a subframe that an additional SRS may be transmitted. Accordingly, DL HARQ feedback (e.g., a PUCCH) and an additional SRS may not collide basically.

Separately, for a PUSCH scheduled by a base station, it may be scheduled for these two types of subframes, a DL HARQ feedback dedicated subframe and a subframe that an additional SRS may be transmitted. Here, collision of an additional SRS and a scheduling PUSCH may be avoided at a base station's (e.g., eNB) discretion (i.e., by controlling a PUSCH resource allocation position). But, there is large in the number of cases between a retransmission PUSCH and an additional SRS in retransmission due to a failure in PUSCH transmission, so collision is highly likely to occur. Accordingly, methods for preventing corresponding collision are proposed as below.

Proposal 1: When a DL/UL configuration (or a TDD configuration) configured for one cell (through a system information block (SIB)) is 1/2/3/4/5

Proposal 1-1: When a PUSCH is transmitted through an UL subframe (and/or a specific UL subframe among other DL HARQ feedback non-dedicated UL subframes (e.g., an UL subframe that additional SRS transmission is not configured/indicated)) in a DL HARQ reference configuration, UE may operate according to at least one of the following options.

Option 1: UE may detect/receive a PHICH for a corresponding PUSCH (same as before) and reflect/apply a result of PHICH detection/reception to retransmission of a corresponding PUSCH.

Here, the PUSCH may include all types of PUSCHs including retransmission of an initially transmitted PUSCH (hereinafter, an initial PUSCH) and a previously transmitted PUSCH (e.g., a PUSCH transmitted when UE decodes a PHICH (Physical channel HybridARQ Indicator Channel) and receives NACK through the PHICH after initial PUSCH transmission) (hereinafter, a retransmission PUSCH).

Proposal 1-2: When a PUSCH is transmitted through a subframe, not an UL subframe in a DL HARQ reference configuration (and/or a specific UL subframe among other DL HARQ feedback non-dedicated UL subframes (e.g., an UL subframe that additional SRS transmission is configured/indicated)), UE may operate according to at least one of the following options.

Here, the PUSCH may include all types of PUSCHs including retransmission of an initially transmitted PUSCH (hereinafter, an initial PUSCH) and a previously transmitted PUSCH (e.g., a PUSCH transmitted when UE decodes a PHICH and receives NACK through the PHICH after initial PUSCH transmission) (hereinafter, a retransmission PUSCH).

Option 2: UE may operate not to detect/receive a PHICH for a corresponding PUSCH. And/or, UE may operate by assuming a corresponding PHICH as ACK. In other words, retransmission for a corresponding PUSCH may be no longer performed.

Option 3: UE may operate not to detect/receive a PHICH for a corresponding PUSCH. And/or, UE may operate by assuming a corresponding PHICH as ACK. And, whether a corresponding PUSCH is retransmitted may be determined based on a HARQ process number or a new data indicator (NDI) of UL DCI received from a base station (i.e., DCI for UL channel scheduling). In other words, if contents of a corresponding PHICH is NACK, a base station may derive retransmission from an UL subframe in a DL HARQ reference configuration by newly performing PUSCH scheduling (e.g., using a HARQ process number or a NDI of UL DCI).

Option 4: UE may also apply an operation of the option 1 to a corresponding PUSCH. In other words, UE may detect/receive a PHICH for a corresponding PUSCH (same as before) and reflect/apply a result of PHICH detection/reception to retransmission of a corresponding PUSCH. Here, when a retransmission PUSCH of a corresponding PUSCH and additional SRS transmission are indicated/configured for the same UL subframe (SF), UE may drop PUSCH transmission and perform only additional SRS transmission. In other words, an additional SRS may have higher priority than PUSCH retransmission. Even when a frequency domain resource allocated as a retransmission PUSCH and a frequency domain region allocated as an additional SRS are configured for the same UL subframe although they are not completely overlapped, an operation of the option 4 may be performed.

For example, an operation of a terminal when TDD configuration (i.e., DL/UL configuration) 2 is configured as in the following table 6 in a specific cell is described.

[Table 6]

| SF# 0 | #1 | #2 | #3 | #4 | #5 | #6 | #7 | #8 | #9 |
|-------|-----|-----|-----|-----|-----|-----|-----|-----|-----|
| DL | SSF | UL | DL | DL | DL | SSF | UL | DL | DL |

In Table 6, SF#0 to SF#9 represent a subframe index, respectively. And, DL represents a downlink subframe, UL represents an uplink subframe and SSF represents a special subframe.

A case is assumed that as an UL normal subframe of SF#2 is configured as a DL HARQ reference configuration of a corresponding cell, SF#2 is a DL HARQ feedback (PUCCH) dedicated subframe (SF). If PUSCH scheduling occurs to UE in SF#2, UE may perform an UL HARQ operation as in the option 1. On the other hand, if PUSCH scheduling occurs to UE in SF#7, UE may perform at least one UL HARQ operation among the option 2, 3, 4.

The above-described proposal 1 proposes a method for avoiding collision of a retransmission PUSCH and an additional SRS for a case in which a DL/UL configuration (or a TDD configuration) configured for a specific cell (through a SIB) is 1/2/3/4/5. In this case, RTT (round-trip time) of a PUSCH (from a PUSCH to a retransmission PUSCH) is 10 ms, so retransmission for PUSCH transmission in UL SF index X is performed through the same SF index X after 10 ms. Accordingly, when a PUSCH is transmitted through an UL subframe in a DL HARQ reference configuration, there is no possibility that a retransmission PUSCH and an additional SRS will collide, so the option 1 may be performed. On the other hand, when a PUSCH is transmitted through a subframe, not an UL subframe in a DL HARQ reference configuration, there is a possibility that a retransmission PUSCH and an additional SRS will collide, so a proposal for solving a collision problem may be performed as in the option 2, 3, 4.

Proposal 2: When a DL/UL configuration configured for one cell (through a SIB) is 0/6

Proposal 2-1: When a PUSCH is transmitted through any subframe, UE may operate according to at least one of the following options.

Here, the PUSCH may include all types of PUSCHs including retransmission of an initially transmitted PUSCH (hereinafter, an initial PUSCH) and a previously transmitted PUSCH (e.g., a PUSCH transmitted when UE decodes a PHICH and receives NACK after initial PUSCH transmission) (hereinafter, a retransmission PUSCH).

Option 2: UE may operate not to detect/receive a PHICH for a corresponding PUSCH. And/or, UE may operate by assuming a corresponding PHICH as ACK. In other words, retransmission for a corresponding PUSCH may be no longer performed.

Option 3: UE may operate not to detect/receive a PHICH for a corresponding PUSCH. And/or, UE may operate by assuming a corresponding PHICH as ACK. And, whether a corresponding PUSCH is retransmitted may be determined based on a HARQ process number or a NDI of UL DCI received from a base station (i.e., DCI for UL channel scheduling). In other words, if contents of a corresponding PHICH is NACK, a base station may derive retransmission from an UL subframe in a DL HARQ reference configuration by newly performing PUSCH scheduling (e.g., using a HARQ process number or a NDI of UL DCI).

Option 4: UE may also apply an operation of the option 1 to a corresponding PUSCH. In other words, UE may detect/receive a PHICH for a corresponding PUSCH (same as before) and reflect/apply a result of PHICH detection/reception to retransmission of a corresponding PUSCH. Here, when a retransmission PUSCH of a corresponding PUSCH and additional SRS transmission are indicated/configured for the same UL subframe (SF), UE may drop PUSCH transmission and perform only additional SRS transmission. In other words, an additional SRS may have higher priority than PUSCH retransmission. Even when a frequency domain resource allocated as a retransmission PUSCH and a frequency domain region allocated as an additional SRS are configured for the same UL subframe although they are not completely overlapped, an operation of the option 4 may be performed.

For the above-described proposal 2, when a DL/UL configuration (i.e., a TDD configuration) configured for a specific cell (through a SIB) is 0/6, RTT (round-trip time) of a PUSCH (from a PUSCH to a retransmission PUSCH) is not 10 ms. Accordingly, a possibility of collision between a retransmission PUSCH and an additional SRS is not changed according to whether it is an UL subframe in a DL HARQ reference configuration and a possibility of collision may always exists. Therefore, also in this case, a proposal for solving a collision problem may be performed as in the option 2, 3, 4.

Proposal 3: Regardless of a DL/UL configuration configured for one cell (through a SIB), when an additional SRS triggered by a base station in any subframe collides with a retransmission PUSCH (i.e., a PUSCH transmitted by UE decoding a PHICH and receiving NACK after initial PUSCH transmission), UE may drop additional SRS transmission and perform only retransmission of a PUSCH. In other words, a retransmission PUSCH may have higher priority than an additional SRS. In other words, after initial PUSCH transmission, a HARQ process of detecting a PHICH and retransmitting UL data (a retransmission PUSCH) may be prioritized over an additional SRS. Here, even when a frequency domain resource allocated as a retransmission PUSCH and a frequency domain region allocated as an additional SRS are configured for the same UL SF although they are not completely overlapped, an operation of the above-described proposal 3 may be performed.

A proposal of the above-described method 1 (i.e., proposal 1 to proposal 3) may be also applied to an intra-band CA or intra-band CA situation without being limited to 1 component carrier (CC) or 1 band. For example, for the same operation as option 4 in the proposal 1 and 2, when PUSCH retransmission in a specific CC and an additional SRS configured in other CC occur at the same time, an additional SRS may still have high priority.

For the above-described proposal 3, it is assumed that for a PUSCH which is initially scheduled by a base station and an additional SRS which is triggered by a base station, they may be controlled to avoid collision at a base station's discretion. Accordingly, when an initial PUSCH transmitted by UE fails in transmission and sends a retransmission PUSCH after that, it may collide with an additional SRS triggered by a base station, so a method for controlling corresponding collision was proposed. As importance of a retransmission PUSCH or a PUSCH carrying data may be higher than that of an additional SRS for obtaining DL CSI, an UE operation is proposed accordingly.

Method 2: Method of preventing collision with an additional SRS and other UL channel (e.g., a PUCCH, a PUSCH, etc.) through a configuration/an indication of transmittable subframe(s) of an additional SRS of a base station and/or a configuration/an indication of subframe(s) prioritizing an additional SRS and an UE operation according to a corresponding method

According to Method 2, subframe(s) which may transmit an additional SRS and/or subframe(s) prioritizing an additional SRS may be preconfigured. As such, subframe(s) that an additional SRS may be transmitted and/or that an additional SRS is prioritized are preconfigured, so collision between an additional SRS and other UL channel may be prevented and in addition, ambiguity in an UE operation may be resolved.

Proposal 1: A base station may configure/indicate 'an additional SRS transmittable subframe set (one subframe set may include one or more subframes)' to UE. And, additional SRS transmission timing of subsequent UE after the configuration/indication may be always included within the subframe set. In other words, after additional SRS triggering through DL/UL DCI transmission of a base station, UE may not transmit an additional SRS in any subframe, but may transmit an additional SRS only in a subframe which belongs to the 'additional SRS transmittable subframe set'.

The 'additional SRS transmittable subframe set' may be indicated/updated through a higher layer (e.g., RRC layer) configuration as one or multiple sets. And, a specific set of them may be indicated/updated by a lower layer (e.g., a MAC CE (control element) or DCI) (e.g., a n-bit field). For example, additional SRS transmittable subframe set 1 to 5 may be preconfigured through RRC signaling and one or more sets of them may be indicated/added by lower layer signaling (a MAC CE or DCI). In addition, one or more specific sets of such indicated/added sets may be deleted.

Proposal 1-1: A base station may trigger an additional SRS to UE through DL grant DCI (i.e., DCI scheduling a downlink channel).

In this case, when additional SRS transmission is triggered through DL grant DCI in subframe n (n is a natural number), UE may determine the earliest candidate additional SRS subframe including/after n+4 (or, when a separate candidate subframe is not configured, the earliest UL subframe) as an actual additional SRS transmission subframe. In other words, UE may transmit an additional SRS in the earliest candidate additional SRS subframe (or the earliest UL subframe) of subframe k ($k \geq n+4$, k is a natural number).

Proposal 1-2: A base station may trigger an additional SRS to UE through UL grant DCI (i.e., DCI scheduling an uplink channel).

In this case, when additional SRS transmission is triggered through UL grant DCI in subframe n (n is a natural number), UE may determine the earliest candidate additional SRS subframe after a PUSCH transmission subframe scheduled by corresponding DCI (or, when a separate candidate subframe is not configured, the earliest UL subframe) as an actual additional SRS transmission subframe. In other words, UE may transmit an additional SRS in the earliest candidate additional SRS subframe (or the earliest UL subframe) of subframe k ($k \geq$ PUSCH transmission subframe index, k is a natural number).

The earliest candidate additional SRS subframe in the above-described proposal 1-1 and proposal 1-2 refers to the earliest subframe in a time domain among subframe(s) in the 'additional SRS transmittable subframe set' (e.g., a subframe with the smallest subframe index).

Proposal 2: A base station may configure/indicate 'a subframe set prioritizing an additional SRS (one subframe set may include one or more subframes)' to UE. And, additional SRS transmission timing of subsequent UE after the configuration/indication may follow legacy aperiodic SRS (AP-SRS) transmission timing. In other words, if a trigger occasion is n, a SRS may be transmitted in an UL subframe after n+4. Here, when a corresponding additional SRS collides with other UL channel (e.g., a PUCCH, a PUSCH, a SRS for other cell) in the same subframe within one cell, UE may determine whether to prioritize an additional SRS over other UL channel according to whether a corresponding subframe is the 'additional SRS prioritized subframe (i.e., a subframe included in the additional SRS prioritized subframe set)'.

In other words, when an additional SRS and other UL channel collide, UE may operate as follows. i) When a corresponding subframe is the additional SRS prioritized subframe, UE may transmit an additional SRS by prioritizing an additional SRS over an UL channel. On the other hand, ii) When a corresponding subframe is not the additional SRS prioritized subframe, UE may transmit other UL channel according to the existing LTE priority rule by prioritizing other UL channel over an additional SRS. Here, all symbols may be dropped for a non-prioritized channel (i.e., other UL channels excluding an UL channel transmitted among UL channels colliding in a corresponding subframe) (i.e., not transmitted in all allocated symbols).

The 'additional SRS prioritized subframe set' may be preconfigured through a higher layer (e.g., RRC) configuration and may be indicated/updated through lower layer signaling (e.g., a MAC CE or DCI) (e.g., a n-bit field). For example, additional SRS prioritized subframe set 1 to 5 may be preconfigured through RRC signaling and one or more sets of them may be indicated/added by lower layer signaling (a MAC CE or DCI). In addition, one or more specific sets of such indicated/added sets may be deleted.

Alternatively, for a more dynamic change of a priority rule, a separate field (e.g., a 1-bit field) may be configured in DCI that a base station triggers an additional SRS and whether an additional SRS triggered in corresponding DCI has higher priority over other UL channels may be indicated to UE by the field. For example, when the above-described separate 1-bit field of DCI indicates '1' when an additional SRS and other UL channel collide, UE may consider that an additional SRS is prioritized over other UL channels in a corresponding subframe that an additional SRS is triggered and UE may transmit an additional SRS. Conversely, when the 1-bit field indicates '0', UE may consider that other UL channels are prioritized over an additional SRS in a corresponding subframe that an additional SRS is triggered and UE may transmit other UL channel.

For an operation between a base station and a terminal, the above-described proposal 1 or proposal 2 may be independently applied and in addition, may be applied by a combination of proposal 1 and proposal 2.

In addition, a proposal of the above-described method 2 (i.e., proposal 1 and 2) may be also applied to an intra-band CA or intra-band CA situation without being limited to 1 component carrier (CC) or 1 band.

Also in NR MIMO Rel-17, an additional (or enhanced) SRS supporting more symbols may be defined for a NR legacy SRS (i.e., up to 4 symbols in one SRS resource may be configured in last 6 symbols in one slot.) as in LTE MIMO Rel-16.

In reference to a Rel-17 NR MIMO(FeMIMO) discussion for SRS enhancement, SRS enhancement targeted for both FR1 and FR2:

    a. identifies and specifies enhancement in aperiodic SRS triggering to enable more flexible triggering and/or DCI overhead/usage decrease.
    b. specifies SRS switching up to 8 antennas (e.g., xTyR, x = {1, 2, 4} and y = {6, 8}).
    c. evaluates the following mechanism(s) and if necessary, specifies them to enhance SRS capacity and/or coverage: SRS time bundling, increased SRS repetitions, partial sounding across a frequency

As such, in order to enhance capacity and coverage of a NR SRS, it is expected that multi-symbol SRSs exceeding 4 symbols will be supported in a time domain space/resource other than last 6 symbols in one slot. In this case, for a (Rel-17) additional (or enhanced) SRS, for a specific UL slot, a case may occur in which transmission timing of a SRS collides with transmission timing of an UL channel (e.g., a PUCCH, a PUSCH, a PRACH (physical random access channel), etc.) at a symbol level, and in this case, ambiguity may occur in a terminal operation.

Based on such a background, proposal 1 and proposal 2 of the method 2 are additionally proposed (hereinafter, proposal 1', proposal 2'). In this method, TDD, a system mainly targeted in NR, is considered. When a terminal is configured/indicated to transmit a (Rel-17 NR) additional (or enhanced) SRS, an operation is proposed that a terminal transmits a SRS by delaying/shifting a SRS to an uplink slot which may transmit a SRS. For example, an aperiodic SRS may be delayed/shifted to an uplink slot which may transmit a SRS regardless of a slot offset configured in a corresponding SRS resource set. In addition, an aperiodic SRS may be delayed/shifted to an uplink slot which may transmit a SRS although a slot after a slot offset configured in a corresponding SRS resource set from a triggered occasion is not an UL slot.

When a SRS is delayed/shifted, it means SRS transmission is delayed. In other words, if a SRS scheduled to be transmitted in slot n is delayed/shifted to slot n+x, the SRS may be transmitted in slot n+x, not in slot n.

Specifically, methods for preventing collision between a (Rel-17 NR) additional SRS and other UL channel and resolving ambiguity in an UE operation are proposed across proposal 1' and proposal 2'.

Proposal 1': Regardless of a slot offset configured in a (aperiodic) SRS resource set configured by a base station or although a slot after a slot offset from a triggered occasion is not an UL slot, SRS transmission may be delayed/shifted to an uplink slot that a terminal may transmit a SRS.

Here, a slot offset may be configured per SRS resource set or per SRS resource. In addition, a slot offset may be configured by higher layer signaling (e.g., RRC signaling) and may be also configured by lower layer signaling (e.g., a MAC CE or DCI). In addition, one or more slot offset candidate values may be preconfigured by higher layer signaling and a specific value of the one or more slot offset candidate values may be indicated by lower layer signaling. Here, one or more slot offset candidate values may be preconfigured per SRS resource set or per SRS resource by higher layer signaling.

A slot offset may mean spacing from an occasion that SRS transmission is triggered by DCI (i.e., an occasion that DCI is received) to a transmission occasion of a SRS. In addition, a slot offset may mean slot spacing from a slot that SRS transmission is triggered by DCI (i.e., a slot that DCI is received) to a transmission slot of a SRS. For example, if a slot that SRS transmission is triggered by DCI is slot n and a slot offset is 4, a SRS may be transmitted in slot n+4.

Proposal 1' -1: When a base station triggers a (Rel-17 NR) additional SRS resource set to UE through DCI format 1_1 (DL scheduling DCI), UE may operate as follows.

PDSCH transmission is scheduled by DCI, so collision with a SR may not be considered. When additional SRS transmission is triggered through DCI format 1_1 in slot n, UE may determine slot n+(slot offset) or the earliest UL slot after slot n+(slot offset) as an actual additional SRS transmission slot and transmit a SRS in a corresponding determined slot. Here, the earliest UL slot may correspond to the earliest slot determined in a time domain and the earliest UL slot after slot n+(slot offset) may mean an UL slot having the smallest slot index after slot n+(slot offset).

Proposal 1' -2: When a base station triggers a (Rel-17 NR) additional SRS resource set to UE through DCI format 0_1 (UL scheduling DCI), UE may operate as follows.

When additional SRS transmission is triggered through DCI format 0_1 in slot n, UE may determine SRS transmission timing by the following option and transmit a SRS at determined timing.

Option 1) A case is described in which a SRS is triggered without PUSCH scheduling. In this case, PUSCH transmission is not scheduled, so collision with a SRS may not be considered. For example, when a SRS is triggered without PUSCH scheduling, it may correspond to a case in which an UL-SCH indicator of corresponding DCI format 0_1 is '0' and a SRS request is 'non zero'.

When additional SRS transmission is triggered through corresponding DCI format 0_1 in slot n, UE may determine slot n+(slot offset) or the earliest UL slot after slot n+(slot offset) as an actual additional SRS transmission slot and transmit a SRS in a corresponding determined slot.

Option 2-1) When a PUSCH and a SRS are scheduled at the same time (when UE is scheduled to transmit a transport block by DCI and SRS transmission is triggered), PUSCH transmission is scheduled, so collision between a PUSCH and a SRS needs to be considered. For example, when a PUSCH and a SRS are scheduled at the same time, it may correspond to a case in which an UL-SCH indicator of corresponding DCI format 0_1 is '1' and a SRS request is 'non zero'.

If a PUSCH transmission UL slot by slot offset (K_2) of a PUSCH (slot offset K_2 of a PUSCH may mean spacing (slot spacing) from an occasion (a slot) that DCI scheduling a PUSCH is transmitted/received to a transmission occasion (slot) of a PUSCH) is not the same as an UL slot which will transmit a SRS according to the above-described option 1, a terminal may transmit a PUSCH and a SRS in each transmission slot. In other words, it corresponds to a case in which a corresponding PUSCH and SRS do not collide, so they may be transmitted respectively in a different slot.

Option 2-2) When a PUSCH and a SRS are scheduled at the same time (when UE is scheduled to transmit a transport block by DCI and SRS transmission is triggered), PUSCH transmission is scheduled, so collision between a PUSCH and a SRS needs to be considered. For example, when a PUSCH and a SRS are scheduled at the same time, it may correspond to a case in which an UL-SCH indicator of corresponding DCI format 0_1 is '1' and a SRS request is 'non zero'.

If a PUSCH transmission UL slot by slot offset(K_2) of a PUSCH is the same as an UL slot to be transmitted according to the above-described option 1, but a PUSCH and a SRS are not overlapped at a symbol level in a corresponding slot, a terminal may transmit both a PUSCH and a SRS in a corresponding slot. Here, not being overlapped at a symbol level means that any one symbol is not overlapped between transmission symbol(s) of a PUSCH and transmission symbol (s) of a SRS. In other words, a corresponding PUSCH and SRS are not transmitted in the same slot, but do not collide with each other at a symbol level, so they may be transmitted in the same slot.

Option 2-3) When a PUSCH and a SRS are scheduled at the same time (when UE is scheduled to transmit a transport block by DCI and SRS transmission is triggered), PUSCH transmission is scheduled, so collision between a PUSCH and a SRS needs to be considered. For example, when a PUSCH and a SRS are scheduled at the same time, it may correspond to a case in which an UL-SCH indicator of corresponding DCI format 0_1 is '1' and a SRS request is 'non zero'.

If a PUSCH transmission UL slot by slot offset(K_2) of a PUSCH is the same as an UL slot to be transmitted according to the above-described option 1 and a PUSCH and a SRS are overlapped at a symbol level in a corresponding slot, a terminal may transmit a PUSCH in a corresponding slot and a terminal may perform SRS transmission by shifting/delaying it in the next valid UL slot.

Subsequently, when a SRS collides again with (another) PUSCH in a corresponding valid UL slot, a terminal may transmit a SRS in the next valid UL slot by shifting/delaying SRS transmission again by considering low priority of a SRS. But, for a SRS shift/delay operation of a terminal, the total number of shift/delay may be limited to i (e.g., i=5) to prevent error propagation. And, if a corresponding limit is exceeded, a terminal may drop a SRS. Alternatively, when a window (a time duration) that a SRS is shifted/delayed is limited like t [ms] or k slots (e.g., t=20, k=20) from n, an occasion that DCI arrives, and a corresponding window is passed (exceeded), a terminal may drop a SRS.

As such, the maximum number that a SRS may be shifted/delayed and/or a window that a SRS may be shifted/delayed may be configured to a terminal by higher layer signaling (e.g., RRC signaling) or dynamic signaling (e.g., a MAC CE or DCI). In addition, the maximum number that a SRS may be shifted/delayed and/or a window (or a time duration) that a SRS may be shifted/delayed may be configured per SRS resource set or per SRS resource.

Alternatively, a terminal may transmit only the remaining symbols except for overlapped symbol(s) for a corresponding SRS. In other words, a terminal may transmit a SRS in the remaining symbol(s) except for symbol(s) overlapped with the PUSCH among symbols(s) allocated by SRS transmission.

Alternatively, SRS transmission itself may be dropped. In other words, although SRS transmission is triggered by DCI, a terminal may not perform corresponding SRS transmission.

Proposal 2': A base station may configure/indicate 'an additional SRS prioritized slot (or slot set)' to a terminal. And, additional SRS transmission timing of subsequent UE after the configuration/indication may follow timing of proposal 1' of the above-described method 2. And, when a corresponding additional SRS collides with other UL channel (e.g., a PUCCH, a PUSCH, a PRACH, a SRS for other cell) at a symbol level in the same slot within one cell, UE may determine whether to prioritize an additional SRS according to whether a corresponding SRS transmission slot is a slot configured to prioritize SRS transmission (i.e., the additional SRS prioritized slot).

In other words, when an additional SRS and other UL channel collide in the same slot, UE 1) may transmit an additional SRS in the same slot by prioritizing an additional SRS when a corresponding slot is the additional SRS prioritized slot. But, an additional SRS is not always prioritized over all UL channels and priority may be determined according to 'a priority rule' according to the present disclosure described after. On the other hand, 2) when a corresponding slot is not the additional SRS prioritized slot, a terminal may transmit other UL channel according to the existing NR priority rule by prioritizing other UL channels in the same slot.

Here, all symbols may be dropped for a non-prioritized UL channel (i.e., other UL channels excluding an UL channel transmitted among UL channels colliding in a corresponding slot). In other words, a non-prioritized UL channel may not be transmitted in all symbols within a corresponding slot.

Alternatively, a non-prioritized UL channel may be transmitted only in the remaining symbols except for overlapped symbols in a corresponding slot.

As an example of 'a priority rule' according to the present disclosure, a SRS has higher priority only over a PUSCH and for other UL channel (e.g., a PUCCH, a PRACH, etc.), a corresponding UL channel may have higher priority over a SRS. Specifically, by considering that other UL channels other than a SRS are a channel which plays a more important role than a SRS, a terminal may preferentially transmit a PRACH and a PUCCH when a PRACH/a PUCCH and an additional SRS collide in the slot in the 'additional SRS prioritized slot set'. In addition, when a PUSCH and an additional SRS collide, it is possible to achieve an effect of SRS capacity/coverage enhancement through transmission of multi-symbol SRSs exceeding 4 symbols by preferentially transmitting a SRS.

As another example, the 'priority rule' according to the present disclosure may be determined based on contents of an UL channel colliding with a SRS. Specifically, a terminal may transmit an additional SRS in preference to a PUCCH and/or a PUSCH in the 'additional SRS prioritized slot set'. Here, it may be configured to prioritize an additional SRS over a PUCCH and/or a PUSCH for CSI reporting carrying relatively less important information according to contents of a PUSCH/a PUCCH. For example, when an additional SRS and a PUCCH and/or a PUSCH carrying ACK/NACK collide in the slot, a terminal may drop a SRS. On the other hand, when an additional SRS and a PUCCH and/or a PUSCH carrying CSI reporting information collide, a terminal may drop a PUCCH and/or a PUSCH. Here, a terminal may drop transmission of a corresponding UL channel in all symbols for a non-prioritized channel. Alternatively, a terminal may transmit a corresponding UL channel only in the remaining symbols except for overlapped symbols in a non-prioritized channel.

As another example, in 'a priority rule' according to the present disclosure, only a SRS with specific usage may have higher priority over other UL channel. This embodiment may be combined with any one of the above-described 2 embodiments and may be applied as a precondition for an additional SRS to have priority over other UL channel. Specifically, only an aperiodic SRS transmitted by a terminal according to a dynamic indication of a base station (e.g., gNB) or only a SRS with specific usage may have higher priority over other UL channel. For example, only when transmission of a (aperiodic) SRS resource belonging to a (aperiodic) SRS resource set with 'codebook' or 'non-codebook' usage playing an important role in UL link adaptation is configured/indicated, a SRS may be prioritized over other UL channel. Alternatively, only when transmission of a (aperiodic) SRS resource belonging to a (aperiodic) SRS resource set with 'antenna switching' usage to obtain DL channel information by using reciprocity is configured/indicated, a SRS may be prioritized over other UL channel.

The above-described operation may become a standard for an operation between a base station and a terminal by being predefined in a form of a priority rule regardless of a configuration/an indication of 'an additional SRS prioritized slot set'.

A slot (set) configured to prioritize SRS transmission (i.e., 'the additional SRS prioritized slot set') may be preconfigured through a higher layer (e.g., RRC) configuration and may be indicated/updated through a MAC CE or DCI (e.g., a n-bit field). Alternatively, for a more dynamic change of a priority rule, a separate 1-bit field may be configured for DCI that a base station triggers an additional SRS and whether to have higher priority over other UL channels may be configured to UE for an additional SRS triggered by corresponding DCI through a 1-bit field. For example, when an additional SRS and other UL channel collide, UE may transmit an additional SRS in preference to other UL channels in a corresponding slot that an additional SRS is triggered (i.e., a slot determined according to proposal 1' of the method 2) if the above-described separate 1-bit field of DCI is '1'. Conversely, if the 1-bit field is '0', UE may transmit other UL channel by considering that other UL channels are prioritized over an additional SRS in a corresponding slot that an additional SRS is triggered (i.e., a slot determined according to proposal 1' of the method 2).

For an operation between a base station and a terminal, proposal 1' or proposal 2' of the method 2 may be independently applied and in addition, may be also applied by a combination of proposal 1' and proposal 2'.

In addition, proposal 1' or proposal 2' of method 2 may be also applied to an intra-band CA or intra-band CA situation without being limited to 1 CC or 1 band.

For the above-described proposal 1 and proposal 2 (and/or proposal 1' and proposal 2'), subframe(s) that an additional SRS may be transmitted or that an additional SRS is prioritized may be configured by preconfiguring subframe(s) which may transmit an additional SRS and subframe(s) prioritizing an additional SRS. Accordingly, in an UE operation, there is an effect of defining transmission timing of an additional SRS, preventing collision between an additional SRS and other UL channel and resolving ambiguity.

Embodiment 2

Method 3: An UE operation for collision of an additional SRS and a PUSCH and/or collision between SRSs in a CA (Carrier Aggregation) situation

In LTE to the existing Rel-15, when a SRS and a PUSCH collide in one serving cell, or when a SRS and a PUSCH transmitted to a different serving cell collide, a SRS is dropped by giving higher priority to a PUSCH.

In addition, according to UE capability, when a SRS and a PUSCH are scheduled simultaneously (e.g., in the same subframe) for a different serving cell in a CA situation, an operation is determined according to the sum of SRS and PUSCH transmission power. If the sum of SRS and PUSCH transmission power is not over the maximum transmission power of corresponding UE, a terminal may simultaneously transmit a SRS and a PUSCH of a different cell. On the other hand, if the sum of SRS and PUSCH transmission power is over the maximum transmission power of corresponding UE, a terminal may simultaneously transmit power of a SRS in preference to a PUSCH by clipping it and scaling it down or may drop a SRS itself.

Contrary to it, an UE operation for collision of an additional SRS and a PUSCH in a CA situation of enhanced UE after including Rel-16 is proposed.

Proposal 1: In a CA situation or a single serving cell situation of UE, when an additional SRS and a PUSCH are scheduled at the same time (e.g., in the same subframe or slot) in the same serving cell and collision occurs at the same occasion, UE may give higher priority to an additional SRS to drop a PUSCH and transmit an additional SRS. In addition, when an additional SRS and a PUSCH are scheduled at the same time (e.g., in the same subframe or slot) for a different serving cell in a CA situation and collision occurs at the same occasion, UE may give higher priority to a PUSCH to drop an additional SRS and transmit a PUSCH.

In proposal 1 of the above-described method 3, in a CA situation or a single serving cell situation of UE, when collision between an additional SRS and a PUSCH in the same serving cell occurs, an operation that UE drops a PUSCH is proposed. In addition, when collision between different cells occurs, an operation that UE drops a SRS is proposed. For collision in the same serving cell, it is considered as an error case in which a base station configures/indicates an additional SRS to obtain DL information, but collision with a PUSCH occurs, so it has an effect of clearly determining an UE operation. For collision between different cells, it has an effect of preferentially protecting information loaded in a PUSCH (data, DL HARQ feedback, etc.) like the existing LTE.

Proposal 2: An operation of UE may be determined based on UE capability for the maximum transmission power. When an additional SRS and a PUSCH are scheduled at the same time (e.g., in the same subframe or slot) for a different serving cell in a CA situation and collision occurs at the same occasion, an operation is performed as follows. If the sum of additional SRS and PUSCH transmission power is not over the maximum transmission power of corresponding UE, an additional SRS and a PUSCH of a different cell may be simultaneously transmitted. On the other hand, if the sum of additional SRS and PUSCH transmission power is over the maximum transmission power of corresponding UE, transmission power of a PUSCH may be scaled down and simultaneously transmitted by giving higher priority to an additional SRS or a PUSCH itself may be dropped (i.e., a PUSCH is not transmitted).

In addition, as separate UE capability is defined for whether such simultaneous transmission of an additional SRS and a PUSCH may be possible, UE may report corresponding capability to a base station.

Additionally, a base station may configure/indicate to UE whether such simultaneous transmission of an additional SRS and a PUSCH may be possible. If it is indicated that simultaneous transmission is possible by a corresponding configuration/indication, UE may simultaneously transmit an additional SRS and a PUSCH (even by scaling down transmission power of a PUSCH). Alternatively, if it is indicated that simultaneous transmission is impossible by a corresponding configuration/indication, UE may drop a PUSCH itself as above.

In proposal 2 of the above-described method 3, when an additional SRS and a PUSCH are simultaneously configured/indicated for a different serving cell in a CA situation, it may have an effect of resolving ambiguity of an UE operation. In addition, unlike the existing LTE, it also has an effect of defining a simultaneous transmission and dropping rule by prioritizing an additional SRS for DL CSI information acquisition or information acquisition for DL scheduling.

Proposal 3: In a CA situation of UE, when an additional SRS and a SRS of UpPTS are configured/indicated at the same time (e.g., in the same subframe or slot) for a different serving cell and collision occurs, UE may transmit an additional SRS by prioritizing an additional SRS.

Alternatively, UE may transmit a SRS to which more symbols are allocated and drop a SRS to which less symbols are allocated by comparing the number of symbols of an additional SRS that collision occurs with the number of symbols of a SRS of UpPTS. When having the same number of symbols, UE may transmit an additional SRS and drop a SRS of UpPTS. Alternatively, when having the same number of symbols, UE may transmit a SRS of a cell/a cell group with higher priority (PCell(primary cell)>PSCell(primary secondary cell)>SCell(secondary cell), and/or MCG(master cell group)>SCG(secondary cell group)) and drop a SRS of a low cell/cell group.

In addition, in a CA situation of UE, when additional SRSs are configured/indicated at the same time (e.g., in the same subframe or slot) for a different serving cell and collision occurs, UE may transmit an additional SRS of a cell/a cell group with higher priority (PCell>PSCell>SCell, and/or MCG>SCG) and drop an additional SRS of a low cell/cell group. UE may deprioritize and drop a SRS with less symbols by comparing the number of symbols of additional SRSs that collision occurs.

In addition, in collision between an additional SRS and a SRS of UpPTS in the different serving cell and/or collision between additional SRSs in a different serving cell, separate UE capability may be defined for whether simultaneous transmission of two entities (e.g., a SRS) may be performed and UE may report corresponding capability to a base station. If the sum of transmission power of the colliding two entities (e.g., a SRS) is not over the maximum transmission power of corresponding UE in corresponding UE capability, UE may simultaneously transmit two entities of a different cell. On the other hand, if the sum of transmission power of the colliding two entities is over the maximum transmission power of corresponding UE, transmission power of a deprioritized entity may be simultaneously transmitted by being scaled down or a deprioritized entity may be dropped according to a priority rule of proposal 3 of the above-described method 3. Additionally, a base station may configure/indicate to UE whether such simultaneous transmission of two entities may be performed.

Proposal 3 of the above-described method 3, when each cell has a different TDD configuration (i.e., an UL-DL configuration) in a CA situation of UE, has an effect of resolving ambiguity of an UE operation when an additional SRS and a SRS of UpPTS collide. In addition, it also has an effect of resolving UE operation ambiguity when additional SRSs in a different serving cell collide with each other. For example, when an additional SRS of 13 symbols (i.e., symbol index 0 to 12) collides with a SRS of UpPTS of last 2 symbols (i.e., symbol index 12, 13), if an additional SRS is dropped because of one overlapped symbol, it may be considered waste in terms of resource utilization. Therefore, there is an effect of minimizing resource waste by defining a dropping rule according to the number of symbols.

In an operation between a base station and a terminal, proposal 1 or proposal 2 or proposal 3 of the above-described method 3 may be independently applied and in addition, may be also applied by any combination of two or more of proposal 1, 2, 3 of method 3.

FIG. 11 is a diagram illustrating a signaling procedure between a base station and a terminal for an uplink transmission method according to an embodiment of the present disclosure.

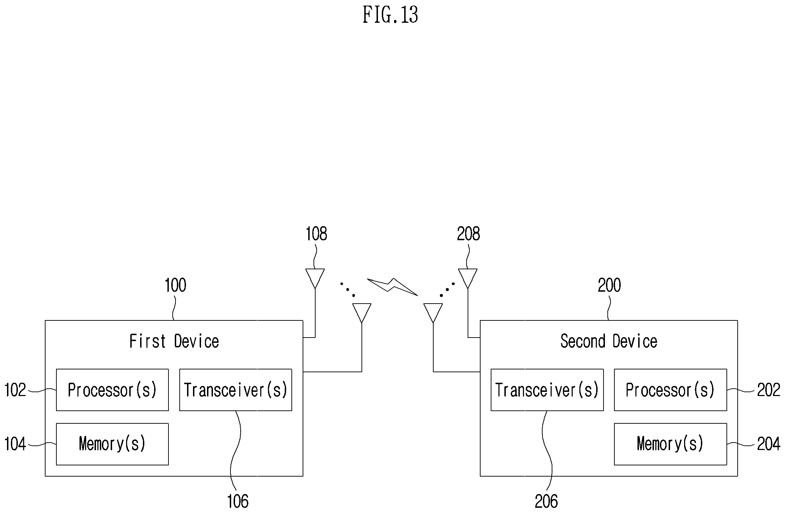

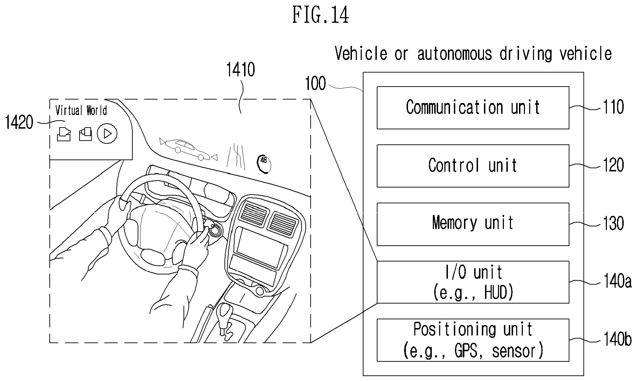

FIG. 11 illustrates a signaling procedure between a terminal and a base station based on the above-proposed embodiment 1 (method 1, method 2), embodiment 2 (method 3). An example in FIG. 11 is for convenience of a description, and it does not limit a scope of the present disclosure. Some step(s) illustrated in FIG. 11 may be omitted according to a situation and/or a configuration. In addition, a base station and a terminal are just one example in FIG. 11, and may be implemented by a device illustrated in the following FIG. 13 and FIG. 14. For example, a processor 102/202 in FIG. 10 may be controlled to transmit and receive a channel/a signal/data/information, etc. (e.g., SRS-related configuration information, DCI for UL/DL scheduling, an additional SRS, a PDCCH, a PDSCH, a PUSCH, a PUCCH, a PHICH, etc.) by using a transceiver 106/206 and may be controlled to store a channel/a signal/data/information, etc. which will be transmitted or received in a memory 104/204.

In FIG. 11, a case is assumed in which UE performs uplink transmission (e.g., an UL channel, an additional SRS, etc.) based on a method described in method 1, method 2 of embodiment 1 and/or method 3 of embodiment 2 described above.

In reference to FIG. 11, a base station (BS) may transmit SRS-related configuration information to UE (user equipment) S1101.

In other words, UE may receive SRS-related configuration information from a base station.

Here, as in the above-described method 1 to method 3, SRS-related configuration information may include information related to SRS (e.g., an additional SRS, an UpPts SRS, etc.) transmission. For example, as an example of information related to SRS transmission, information on a time (slot and/or symbol)/frequency/space resource that a SRS is transmitted, cell information that a SRS is configured, information on a period and the number of repetitions for a periodic SRS, a slot offset for an aperiodic SRS, etc. may be included.

In addition, as in the above-described method 2, SRS-related configuration information may include information on subframe(s)(or slot(s)) which may transmit an additional SRS and/or subframe(s)(or slot(s)) which prioritize an additional SRS.

A SRS may be at least any one of periodic transmission, semi-persistent transmission, aperiodic transmission.

Here, SRS-related configuration information may be transmitted through higher layer signaling (e.g., RRC signaling) and/or dynamic signaling (e.g., a MAC CE or DCI). For example, for RRC signaling, SRS-related configuration information may include a SoundingRS-UL-Config information element (IE) and/or a SRS-config IE.

A base station may transmit to UE DCI related to transmission of a SRS and/or an UL channel (or a DL channel), etc. (through a PDCCH) S1102.

In other words, UE may receive DCI related to transmission of a SRS and/or an UL channel (or a DL channel), etc. (through a PDCCH) from a base station.

Here, DCI may correspond to DCL in the above-described method 1 to method 3 (i.e., DCI for DL channel scheduling, DCI for UL channel scheduling).

In addition, for aperiodic SRS transmission, as described in the method 2 and/or method 3, SRS transmission may be triggered by DCI in S1102.

In addition, as in the method 2, DCI may indicate a slot offset for an additional SRS and/or DCI may indicate whether a triggered SRS is prioritized over an uplink channel.

UE may transmit a SRS and/or UL channel(s) based on received SRS-related configuration information and DCI S1103.

For example, in S1102 before a proposal of the method 1, when an additional SRS is triggered by DCI scheduling

24

a DL channel, transmission timing of a SRS (e.g., a subframe and/or a slot) may be determined according to proposal 1-1 and/or proposal 1'-1 of the method 2.

Alternatively, in S1102 before a proposal of the method 1, when an additional SRS is triggered by DCI scheduling an UL channel, transmission timing of an UL channel and/or a SRS (e.g., a subframe and/or a slot) may be determined according to proposal 1-2 and/or proposal 1'-2 of the method 2.

Here, as in proposal 1'-2 of the method 2, if an UL channel and an additional SRS transmission slot are different or an UL channel and an additional SRS do not collide at a symbol level, UE may transmit both an UL channel and an additional SRS. But, as in proposal 1'-2 of the method 2, if an UL channel and an additional SRS transmission slot are the same and collide at a symbol level in a corresponding slot, UE may transmit a PUSCH in a corresponding slot and delay/shift SRS transmission.

In addition, as in proposal 2 and/or 2' of the method 2, if an UL channel and an additional SRS transmission subframe (or slot) are the same or an UL channel and an additional SRS collide at a symbol level, UE may determine priority between a SRS and an UL channel according to whether a corresponding subframe (or slot) is a subframe (or a symbol) that preconfigured SRS transmission is prioritized. Here, for a subframe (or a symbol) that SRS transmission is prioritized, as in proposal 2' of the method 2, priority between a SRS and an UL channel may be determined according to 'a priority rule' according to the present disclosure.

In addition, as in the above-described method 3, in a situation that for UE, a single serving cell or CA is configured, when an additional SRS and a PUSCH are simultaneously scheduled in the same serving cell and collision occurs, an operation in proposal 1 of method 3 may be performed. In addition, in a situation that for UE, CA is configured, when an additional SRS and a PUSCH are simultaneously scheduled for a different serving cell and collision occurs, an operation in proposal 2 of method 3 may be performed. In addition, in a situation that for UE, CA is configured, when an additional SRS and a SRS of UpPTS are simultaneously configured/indicated for a different serving cell and collision occurs, an operation in proposal 3 of method 3 may be performed.

Subsequently, it is not illustrated in FIG. 11, but a base station may transmit to UE ACK/NACK for a PUSCH received in S1103 from UE (through a PHICH). In other words, UE may receive ACK/NACK for a PUSCH transmitted in S1103 (through a PHICH) from a base station. Here, when a DL/UL configuration (or a TDD configuration) configured for a corresponding cell is 1/2/3/4/5, an operation according to proposal 1 of the method 1 may be performed. In addition, when a DL/UL configuration (or a TDD configuration) configured for a corresponding cell is 0/6, an operation according to proposal 2 of the method 1 may be performed. In addition, regardless of a DL/UL configuration (or a TDD configuration) configured for a corresponding cell, an operation according to proposal 3 of the method 1 may be performed.

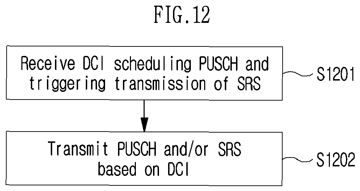

FIG. 12 is a diagram which illustrates an operation of a terminal for an uplink transmission method according to an embodiment of the present disclosure.

FIG. 12 illustrates an operation of a terminal based on embodiment 1 (method 1, method 2), embodiment 2 (method 3) proposed above. An example in FIG. 12 is for convenience of a description, and it does not limit a scope of the present disclosure. Some step(s) illustrated in FIG. 12 may be omitted according to a situation and/or a configuration. In addition, a terminal is just one example in FIG. 12, and may be implemented by a device illustrated in the following FIG. 13 and FIG. 14. For example, a processor 102/202 in FIG. 13 may be controlled to transmit and receive a channel/a signal/data/information, etc. (e.g., SRS-related configuration information, DCI for UL/DL scheduling, an additional SRS, a PDCCH, a PDSCH, a PUSCH, a PUCCH, a PHICH, etc.) by using a transceiver 106/206 and may be controlled to store a channel/a signal/data/information, etc. which will be transmitted or received in a memory 104/204.

In reference to FIG. 12, a terminal receives DCI which schedules a PUSCH and also triggers transmission of a SRS from a base station (through a PDCCH) S1201.

Here, as in the method 2, DCI may indicate a slot offset for an additional SRS and/or DCI may indicate whether a triggered SRS is prioritized over an uplink channel.

A terminal may transmit a PUSCH and/or a SRS to a base station based on DCI S1202.

Here, transmission timing of an UL channel and/or a SRS (e.g., a subframe and/or a slot) may be determined according to proposal 1-2 and/or proposal 1'-2 of the above-described method 2.

Here, as in proposal 1'-2 of the method 2, if an UL channel and an additional SRS transmission slot are different or an UL channel and an additional SRS do not collide at a symbol level, a terminal may transmit both an UL channel and an additional SRS.

But, as in proposal 1'-2 of the method 2, if a transmission slot of a PUSCH and a transmission slot of an additional SRS are the same as a first slot and a PUSCH and a SRS collide in at least one symbol in a first slot, UE may transmit a PUSCH in a first slot. And, a terminal may transmit a SRS in a second slot that SRS transmission may be performed after a first slot by delaying/shifting SRS transmission. In addition, if a SRS collides with an uplink channel in at least one symbol also in a second slot, a terminal may transmit a SRS in a third slot that SRS transmission may be performed after a second slot by delaying/shifting SRS transmission again. Here, transmission of a SRS may be delayed only within a preconfigured time duration or only until the preconfigured maximum number of delays. In other words, when the preconfigured maximum number of delays is exceeded, corresponding SRS transmission may be dropped. In addition, when a preconfigured time duration is exceeded, corresponding SRS transmission may be dropped.

Alternatively, as in proposal 1'-2 of the method 2, if a transmission slot of a PUSCH and a transmission slot of an additional SRS are the same as a first slot and a PUSCH and a SRS collide in at least one symbol in a first slot, a terminal may transmit a SRS excluding the at least one symbol colliding with PUSCH transmission in a first slot.

Alternatively, as in proposal 1'-2 of the method 2, if a transmission slot of a PUSCH and a transmission slot of an additional SRS are the same as a first slot and a PUSCH and a SRS collide in at least one symbol in a first slot, SRS transmission may be dropped.

In addition, as in proposal 2' of the method 2, if an UL channel and a transmission slot of an additional SRS are the same as a first slot and collide at a symbol level in a first slot, a terminal may determine whether to preferentially transmit a SRS or a PUSCH according to whether a first slot is a slot configured to prioritize SRS transmission.

If a first slot is a slot configured to prioritize SRS transmission, whether to transmit a PUSCH or a SRS in a first slot may be determined based on 'a priority rule' according to the present disclosure. As an example of a priority rule, a SRS may be prioritized over a PUSCH and an uplink channel other than a PUSCH may be prioritized over a SRS. As other example of a priority rule, priority between a SRS and an uplink channel may be determined based on contents transmitted in an uplink channel. As another example of a priority rule, only a SRS for predetermined usage may be prioritized over an uplink channel.

In addition, as in the above-described method 3, in a situation that for UE, a single serving cell or CA is configured, when an additional SRS and a PUSCH are simultaneously scheduled in the same serving cell and collision occurs, an operation in proposal 1 of method 3 may be performed. In addition, in a situation that for UE, CA is configured, when an additional SRS and a PUSCH are simultaneously scheduled for a different serving cell and collision occurs, an operation in proposal 2 of method 3 may be performed. In addition, in a situation that for UE, CA is configured, when an additional SRS and a SRS of UpPTS are simultaneously configured/indicated for a different serving cell and collision occurs, an operation in proposal 3 of method 3 may be performed.

It is not illustrated in FIG. 12, but a terminal may receive SRS-related configuration information from a base station before S1201.

Here, as in the above-described method 1 to method 3, SRS-related configuration information may include information related to SRS (e.g., an additional SRS, an UpPts SRS, etc.) transmission. For example, as an example of information related to SRS transmission, information on a time (slot and/or symbol)/frequency/space resource that a SRS is transmitted, cell information that a SRS is configured, information on a period and the number of repetitions for a periodic SRS, a slot offset for an aperiodic SRS, etc. may be included.

In addition, as in the above-described method 2, SRS-related configuration information may include information on subframe(s)(or slot(s)) which may transmit an additional SRS and/or subframe(s)(or slot(s)) which prioritize an additional SRS.

General Device to which the Present Disclosure may be applied

FIG. 13 is a diagram which illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

FIG. 14 illustrates a vehicle device according to an embodiment of the present disclosure.

In reference to FIG. 14, a vehicle 100 may include a communication unit 110, a control unit 120, a memory unit 130, an input and output unit 140a and a positioning unit 140b.

A communication unit 110 may transmit and receive a signal (e.g., data, a control signal, etc.) with external devices of other vehicle, or a base station, etc. A control unit 120 may perform a variety of operations by controlling elements of a vehicle 100. A control unit 120 may control a memory unit 130 and/or a communication unit 110 and may be configured to implement descriptions, functions, procedures, proposals, methods and/or operation flow charts included in the present disclosure. A memory unit 130 may store data/a parameter/a program/a code/a command supporting a variety of functions of a vehicle 100. An input and output unit 140a may output an AR/VR object based on information in a memory unit 130. An input and output unit 140a may include HUD. A positioning unit 140b may obtain position information of a vehicle 100. Position information may include absolute position information, position information in a driving lane, acceleration information, position information with a surrounding vehicle, etc. of a vehicle 100. A positioning unit 140b may include a GPS and a variety of sensors.

In an example, a communication unit 110 of a vehicle 100 may receive map information, traffic information, etc. from an external server and store them in a memory unit 130. A positioning unit 140b may obtain vehicle position information through a GPS and a variety of sensors and store it in a memory unit 130. A control unit 120 may generate a virtual object based on map information, traffic information and vehicle position information, etc. and an input and output unit 140a may indicate a generated virtual object on a window in a vehicle 1410, 1420. In addition, a control unit 120 may determine whether a vehicle 100 normally operates in a driving lane based on vehicle position information. When a vehicle 100 is abnormally out of a driving lane, a control unit 120 may indicate a warning on a window in a vehicle through an input and output unit 140a. In addition, a control unit 120 may send a warning message on abnormal driving to surrounding vehicles through a communication unit 110. According to a situation, a control unit 120 may transmit position information of a vehicle and information on a driving/vehicle problem to a relative agency through a communication unit 110.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of transmitting an uplink in a wireless communication system, the method performed by a terminal comprising:

   receiving downlink control information (DCI) scheduling a physical uplink shared channel (PUSCH) and triggering transmission of a sounding reference signal (SRS) from a base station; and
   transmitting the PUSCH and/or the SRS to the base station based on the DCI,
   wherein when i) a transmission slot of the SRS determined by a slot offset related to the SRS is a same first slot as a transmission slot of the PUSCH and ii) the PUSCH and the SRS collide in at least one symbol in the first slot, the PUSCH is transmitted in the first slot.

2. The method of claim 1, wherein:
   transmission of the SRS is delayed, and the SRS is transmitted in a second slot available for transmission of the SRS after the first slot.

3. The method of claim 2, wherein:

   if the SRS collides with an uplink channel in at least one symbol within the second slot,
   the transmission of the SRS is delayed, and the SRS is transmitted in a third slot available for the transmission of the SRS after the second slot.

4. The method of claim 3, wherein:
   the transmission of the SRS is delayed only within a preconfigured time duration or only until a preconfigured maximum number of delays.

5. The method of claim 1, wherein:
   the SRS is transmitted excluding the at least one symbol colliding with transmission of the PUSCH in the first slot.

6. The method of claim 1, wherein:
   transmission of the SRS is dropped.

7. The method of claim 1, wherein:
   whether to transmit the PUSCH or the SRS in the first slot is determined according to whether the first slot is a slot configured to prioritize SRS transmission.

8. The method of claim 7, wherein:
   if the first slot is the slot configured to prioritize the SRS transmission, whether to transmit the PUSCH or the SRS in the first slot is determined based on a preconfigured priority rule.

9. The method of claim 8, wherein:
   for the priority rule, the SRS is prioritized over the PUSCH and an uplink channel other than the PUSCH is prioritized over the SRS.

10. The method of claim 8, wherein:
    for the priority rule, priority between the SRS and an uplink channel is determined based on contents transmitted in the uplink channel.

11. The method of claim 8, wherein:
    for the priority rule, only the SRS for predetermined usage is prioritized over an uplink channel.

12. The method of claim 1, wherein:
    the PUSCH and the SRS are scheduled in a different cell.

13. The method of claim 12, wherein:
    priority between the PUSCH and the SRS is determined according to whether a sum of transmission power of the PUSCH and the SRS exceeds a maximum transmission power of the terminal.

14. A terminal of transmitting an uplink in a wireless communication system, the terminal comprising:

    at least one transceiver for transmitting and receiving a wireless signal; and
    at least one processor for controlling the at least one transceiver,
    wherein the at least one processor configured to:

    receive downlink control information (DCI) scheduling a physical uplink shared channel (PUSCH) and triggering transmission of a sounding reference signal (SRS) from a base station; and
    transmit the PUSCH and/or the SRS to the base station based on the DCI,
    wherein when i) a transmission slot of the SRS determined by a slot offset related to the SRS is a same first slot as a transmission slot of the PUSCH and ii) the PUSCH and the SRS collide in at least one symbol in the first slot, the PUSCH is transmitted in the first slot.

15. At least one non-transitory computer-readable medium storing at least one instruction, wherein the at least one instruction executable by at least one processor controls a device to:

    receive downlink control information (DCI) scheduling a physical uplink shared channel (PUSCH) and triggering transmission of a sounding reference signal (SRS) from a base station; and
    transmit the PUSCH and/or the SRS to the base station based on the DCI,
    wherein when i) a transmission slot of the SRS determined by a slot offset related to the SRS is a same first slot as a transmission slot of the PUSCH and ii) the PUSCH and the SRS collide in at least one symbol in the first slot, the PUSCH is transmitted in the first slot.

16. A processing apparatus configured to control a terminal for transmitting an uplink in a wireless communication system, the processing apparatus comprising:

    at least one processor; and
    at least one computer memory operably connected to the at least one processor and storing instructions that, based on being executed by the at least one processor,
    wherein the operations comprising:

    receiving downlink control information (DCI) scheduling a physical uplink shared channel (PUSCH) and triggering transmission of a sounding reference signal (SRS) from a base station; and
    transmitting the PUSCH and/or the SRS to the base station based on the DCI,

wherein when i) a transmission slot of the SRS determined by a slot offset related to the SRS is a same first slot as a transmission slot of the PUSCH and ii) the PUSCH and the SRS collide in at least one symbol in the first slot, the PUSCH is transmitted in the first slot.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 |10|11|12|13|

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$        $l = 14 \cdot 2^{\mu} - 1$

FIG.4

FIG.5

Resource grid

A carrier
(up to 3300 subcarriers,i.e.,275 RBs)

A BWP

1 RB=12 subcarrier

1 RE

1 subcarrier

1 Symbol

l=0 ·····

k=0

EP 4 089 951 A1

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

## FIG.7

(a) Single CC

(b) Multiple CC

EP 4 089 951 A1

# FIG.8

Cells in a eNB

| Cell A | Cell B | Cell C | Cell D |

Cells configured to UE A

| Pcell (Cl=0) | Scell | Scell |
| Always activated | Activated | Deactivated |

Cells configured to UE B

| Scell | Pcell (Cl=0) | Scell |
| Deactivated | Always activated | Deactivated |

Cells configured to UE C

| Pcell (Cl=0) |
| Always activated |

EP 4 089 951 A1

## FIG.9

(a)

(b)

FIG.10

Slot0=0.5ms | Slot1=0.5ms

| CP | LB #1 | CP | LB #2 | CP | LB #3 | CP | LB #4 RS | CP | LB #5 | CP | LB #6 | CP | LB #7 | CP | LB #8 | CP | LB #9 | CP | LB #10 | CP | LB #11 RS | CP | LB #12 | LB #13 | CP | LB #14 SRS |

Subframe=1ms

FIG.11

| BS | | UE |

Configuration Information related to SRS — S1101

DCI — S1102

SRS and/or UL Channel — S1103

FIG.12

Receive DCI scheduling PUSCH and
triggering transmission of SRS ── S1201

Transmit PUSCH and/or SRS
based on DCI ── S1202

FIG.13

FIG.14

Virtual World

1420

1410

100

Vehicle or autonomous driving vehicle

| Communication unit | 110 |
| Control unit | 120 |
| Memory unit | 130 |
| I/O unit (e.g., HUD) | 140a |
| Positioning unit (e.g., GPS, sensor) | 140b |

## INTERNATIONAL SEARCH REPORT

International application No.

**PCT/KR2021/001442**

### A. CLASSIFICATION OF SUBJECT MATTER

**H04L 5/00**(2006.01)i; **H04L 5/14**(2006.01)i; **H04W 72/04**(2009.01)i; **H04W 72/12**(2009.01)i

According to International Patent Classification (IPC) or to both national classification and IPC

### B. FIELDS SEARCHED

Minimum documentation searched (classification system followed by classification symbols)

H04L 5/00(2006.01); H04W 4/00(2009.01); H04W 48/12(2009.01); H04W 52/36(2009.01); H04W 56/00(2009.01); H04W 72/04(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), SRS(sounding reference signal), 트리거링 (triggering), 슬롯 오프셋(slot offset), 충돌(collision), 드랍(drop)

### C. DOCUMENTS CONSIDERED TO BE RELEVANT

| Category* | Citation of document, with indication, where appropriate, of the relevant passages | Relevant to claim No. |
|---|---|---|
| Y | US 2018-0083752 A1 (LG ELECTRONICS INC.) 22 March 2018 (2018-03-22) See paragraphs [0198] and [0302]-[0303]; claim 1; and figure 14. | 1-16 |
| Y | KR 10-2019-0004283 A (QUALCOMM INCORPORATED) 11 January 2019 (2019-01-11) See paragraphs [0075], [0091] and [0101]-[0110]; claim 1; and figure 12. | 1-16 |
| A | US 9270433 B2 (MEDIATEK INC.) 23 February 2016 (2016-02-23) See column 4, line 62 – column 6, line 4; claim 1; and figure 2. | 1-16 |
| A | US 9131457 B2 (NAM, Young-Han et al.) 08 September 2015 (2015-09-08) See column 13, line 16 – column 14, line 51; claim 1; and figures 5-6. | 1-16 |
| A | KR 10-2018-0128043 A (HUAWEI TECHNOLOGIES CO., LTD.) 30 November 2018 (2018-11-30) See paragraphs [0025]-[0033]; claim 1; and figure 2. | 1-16 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 June 2021** | **04 June 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2021/001442**

| Patent document cited in search report | | | Publication date (day/month/year) | Patent family member(s) | | | Publication date (day/month/year) |
|---|---|---|---|---|---|---|---|
| US | 2018-0083752 | A1 | 22 March 2018 | CN | 107431888 | A | 01 December 2017 |
| | | | | CN | 107431888 | B | 26 February 2021 |
| | | | | EP | 3282627 | A1 | 14 February 2018 |
| | | | | EP | 3282627 | A4 | 21 November 2018 |
| | | | | EP | 3282627 | B1 | 08 July 2020 |
| | | | | JP | 2018-515970 | A | 14 June 2018 |
| | | | | JP | 2019-205193 | A | 28 November 2019 |
| | | | | JP | 6563514 | B2 | 21 August 2019 |
| | | | | KR | 10-2017-0139056 | A | 18 December 2017 |
| | | | | KR | 10-2081939 | B1 | 26 February 2020 |
| | | | | US | 10756862 | B2 | 25 August 2020 |
| | | | | US | 2020-0304262 | A1 | 24 September 2020 |
| | | | | WO | 2016-163805 | A1 | 13 October 2016 |
| KR | 10-2019-0004283 | A | 11 January 2019 | AU | 2017-260641 | A1 | 11 October 2018 |
| | | | | BR | 112018072792 | A2 | 12 March 2019 |
| | | | | CN | 109478965 | A | 15 March 2019 |
| | | | | EP | 3453132 | A1 | 13 March 2019 |
| | | | | JP | 2019-519135 | A | 04 July 2019 |
| | | | | US | 10333670 | B2 | 25 June 2019 |
| | | | | US | 2017-0324528 | A1 | 09 November 2017 |
| | | | | US | 2019-0312704 | A1 | 10 October 2019 |
| | | | | WO | 2017-192232 | A1 | 09 November 2017 |
| US | 9270433 | B2 | 23 February 2016 | CN | 102450073 | A | 09 May 2012 |
| | | | | CN | 102450073 | B | 08 June 2016 |
| | | | | CN | 102986275 | A | 20 March 2013 |
| | | | | CN | 102986275 | B | 15 July 2015 |
| | | | | CN | 105049164 | A | 11 November 2015 |
| | | | | CN | 105049164 | B | 17 August 2018 |
| | | | | EP | 2520118 | A1 | 07 November 2012 |
| | | | | EP | 2520118 | A4 | 13 January 2016 |
| | | | | EP | 2520118 | B1 | 29 August 2018 |
| | | | | EP | 2583518 | A1 | 24 April 2013 |
| | | | | EP | 2583518 | A4 | 15 January 2014 |
| | | | | ES | 2699741 | T3 | 12 February 2019 |
| | | | | JP | 2013-529040 | A | 11 July 2013 |
| | | | | JP | 2013-541922 | A | 14 November 2013 |
| | | | | JP | 5694548 | B2 | 01 April 2015 |
| | | | | TW | 201220909 | A | 16 May 2012 |
| | | | | TW | 201225715 | A | 16 June 2012 |
| | | | | TW | I446813 | B | 21 July 2014 |
| | | | | TW | I462622 | B | 21 November 2014 |
| | | | | US | 2011-0310818 | A1 | 22 December 2011 |
| | | | | US | 2012-0044906 | A1 | 23 February 2012 |
| | | | | US | 2014-0341167 | A1 | 20 November 2014 |
| | | | | US | 2014-0362811 | A1 | 11 December 2014 |
| | | | | US | 8837394 | B2 | 16 September 2014 |
| | | | | US | 8855053 | B2 | 07 October 2014 |
| | | | | US | 9124395 | B2 | 01 September 2015 |
| | | | | WO | 2011-157237 | A1 | 22 December 2011 |
| | | | | WO | 2012-059064 | A1 | 10 May 2012 |

Form PCT/ISA/210 (patent family annex) (July 2019)

**INTERNATIONAL SEARCH REPORT**
**Information on patent family members**

International application No.

**PCT/KR2021/001442**

| Patent document cited in search report | | | Publication date (day/month/year) | Patent family member(s) | | | Publication date (day/month/year) |
|---|---|---|---|---|---|---|---|
| US | 9131457 | B2 | 08 September 2015 | CN | 103069893 | A | 24 April 2013 |
| | | | | CN | 103069893 | B | 15 August 2017 |
| | | | | CN | 107332652 | A | 07 November 2017 |
| | | | | CN | 107332652 | B | 08 December 2020 |
| | | | | EP | 2604077 | A2 | 19 June 2013 |
| | | | | EP | 2604077 | A4 | 17 February 2016 |
| | | | | EP | 2604077 | B1 | 09 December 2020 |
| | | | | EP | 3806552 | A1 | 14 April 2021 |
| | | | | JP | 2013-538504 | A | 10 October 2013 |
| | | | | JP | 2016-021784 | A | 04 February 2016 |
| | | | | JP | 5837068 | B2 | 24 December 2015 |
| | | | | JP | 6243390 | B2 | 06 December 2017 |
| | | | | KR | 10-1736951 | B1 | 30 May 2017 |
| | | | | KR | 10-2013-0106817 | A | 30 September 2013 |
| | | | | US | 10757657 | B2 | 25 August 2020 |
| | | | | US | 10805886 | B2 | 13 October 2020 |
| | | | | US | 2012-0039273 | A1 | 16 February 2012 |
| | | | | US | 2016-0014701 | A1 | 14 January 2016 |
| | | | | US | 2017-0318543 | A1 | 02 November 2017 |
| | | | | US | 9788278 | B2 | 10 October 2017 |
| | | | | WO | 2012-021041 | A2 | 16 February 2012 |
| | | | | WO | 2012-021041 | A3 | 18 May 2012 |
| KR | 10-2018-0128043 | A | 30 November 2018 | BR | 112018069878 | A2 | 05 February 2019 |
| | | | | CA | 3019646 | A1 | 05 October 2017 |
| | | | | CN | 108886457 | A | 23 November 2018 |
| | | | | EP | 3433968 | A1 | 30 January 2019 |
| | | | | JP | 2019-514268 | A | 30 May 2019 |
| | | | | JP | 2020-099057 | A | 25 June 2020 |
| | | | | JP | 6651650 | B2 | 19 February 2020 |
| | | | | KR | 10-2188674 | B1 | 08 December 2020 |
| | | | | US | 10270570 | B2 | 23 April 2019 |
| | | | | US | 10693610 | B2 | 23 June 2020 |
| | | | | US | 2017-0302419 | A1 | 19 October 2017 |
| | | | | US | 2019-0044678 | A1 | 07 February 2019 |
| | | | | US | 2020-0322108 | A1 | 08 October 2020 |
| | | | | WO | 2017-173388 | A1 | 05 October 2017 |
| | | | | WO | 2017-173388 | A8 | 19 April 2018 |

Form PCT/ISA/210 (patent family annex) (July 2019)